# EUROPÄISCHE PATENTSCHRIFT

(11) **EP 3 793 711 B1**
(45) Veröffentlichungstag und Bekanntmachung des Hinweises auf die Patenterteilung: **21.12.2022**
(21) Anmeldenummer: 19724443.7
(22) Anmeldetag: 14.05.2019
(51) Int. Cl.: B01D 46/00, B01D 46/24, B01D 46/52, F02M 35/024

(54) **FILTERELEMENT UND FILTERSYSTEM MIT EINEM FILTERELEMENT UND EINEM GEHÄUSE**
FILTER ELEMENT, AND FILTER SYSTEM COMPRISING A FILTER ELEMENT AND A HOUSING
ÉLÉMENT FILTRANT ET SYSTÈME DE FILTRATION ÉQUIPÉ D'UN ÉLÉMENT FILTRANT ET D'UN BOÎTIER

(30) Priorität: 18.05.2018 DE 102018004041; 15.08.2018 DE 102018006542; 21.08.2018 DE 102018120321
(43) Veröffentlichungstag der Anmeldung: 24.03.2021
(73) Patentinhaber: MANN+HUMMEL GmbH, 71636 Ludwigsburg (DE)
(72) Erfinder: NEEF, Pascal, 78647 Trossingen (DE); KUPFER, Friedrich, 84163 Marklkofen (DE); SUDERMANN, Arthur, 71711 Steinheim (DE)
(74) Vertreter: Mann + Hummel Intellectual Property
(86) Internationale Anmeldenummer: PCT/EP2019/062266
(87) Internationale Veröffentlichungsnummer: WO 2019/219635

(56) Entgegenhaltungen:
- EP-A2- 2 535 550
- WO-A1-2014/202450
- WO-A1-2017/050370
- WO-A1-2018/073198
- DE-A1-102015 004 965
- US-A1- 2013 232 934

## Beschreibung

### Technisches Gebiet

Die Erfindung betrifft ein Filterelement sowie ein Filtersystem, insbesondere ein Luftfiltersystem, mit einem Filterelement und einem Gehäuse.

### Stand der Technik

Die Ansaugluft von Verbrennungsmotoren wird vor dem Eintritt in einen Brennraum des Verbrennungsmotors üblicherweise mittels eines Luftfilters von Verschmutzungen gereinigt. Hierfür eingesetzte Luftfilterelemente können ein sternförmig gefaltetes Filtermedium aufweisen, welches eine Längsachse ringförmig umgibt. Für Verbrennungsmotoren von Nutzfahrzeugen, beispielsweise schweren Lastkraftwagen, kann ein solches Filterelement eine Länge von mehr als 300 mm, insbesondere von mehr als 500 mm aufweisen. Die Filterelemente müssen sicher in ihrem Filtergehäuse befestigt sein. Da sich Filtermedien im Betrieb mit aus der Luft herausgefilterten Partikeln zusetzen, ist ein regelmäßiger Austausch der Filterelemente erforderlich.

EP 2 535 550 A2 zeigt ein Ringfilterelement mit einem Verbindungsbereich. WO 2018/073198 A1 zeigt ein Rundfilterelement mit einem Positionierungselement. Die WO 2011/045220 A2 offenbart einen Filtereinsatz umfassend ein Filterelement mit einem entlang der Seitenflächen des Filterelements umlaufenden Rahmen, wobei der Rahmen eine axiale Dichtung trägt. Die Dichtung ist mit einer Dichtfläche eines Filter-gehäuses in Kontakt. Der Rahmen weist an zwei gegenüber liegenden Seitenflächen des Filtereinsatzes eine erste und zweite Kontaktfläche zum Verspannen des Filterelements mittels eines ersten und eines zweiten Verspannelements auf. Der Filtereinsatz kann durch eine seitliche Montageöffnung in das Filtergehäuse eingeschoben werden. Die Verspannelemente können als Verspannschwerter an einem Deckel zum Verschließen der Montageöffnung ausgebildet sein.

### Offenbarung der Erfindung

Eine Aufgabe der Erfindung ist es, ein Filterelement zu schaffen, das einen einfachen Austausch auch bei beengtem Bauraum ermöglicht.

Eine weitere Aufgabe der Erfindung ist die Schaffung eines Filtersystems, das einen einfachen Austausch des Filterelements ermöglicht.

Eine weitere Aufgabe der Erfindung ist die Schaffung eines Gehäuses für ein solches Filtersystem, das einen einfachen Austauschund einen lagerichtigen Einbau des Filterelements ermöglicht.

Die vorgenannte Aufgabe wird nach einem Aspekt der Erfindung gelöst von einem Filterelement zum Filtern eines Fluids mit den Merkmalen des Anspruchs 1.

Eine weitere Aufgabe wird nach einem Aspekt der Erfindung gelöst von einem Filtersystem mit den Merkmalen des Anspruchs 11.

Günstige Ausgestaltungen und Vorteile der Erfindung ergeben sich aus den weiteren Ansprüchen, der Beschreibung und der Zeichnung.

Es wird ein Filterelement zum Filtern eines, insbesondere gasförmigen, Fluids vorgeschlagen, mit einer Längsachse, umfassend einen um die Längsachse angeordneten Filterbalg, der einen Innenraum umschließt. Das Filterelement weist ein stirnseitiges erstes Ende und ein diesem gegenüberliegendes stirnseitige zweites Ende auf, mit einer zum Innenraum geöffneten Endscheibe am ersten Ende und einer geschlossenen Endscheibe am gegenüberliegenden zweiten Ende. Der Filterbalg weist Falten auf, deren radial äußeren Faltenkanten in seiner äußeren Mantelfläche liegen. Derer Filterbalg weist zumindest an einem seiner stirnseitigen Enden eine Einkerbung auf, deren axiale Länge in Richtung der Längsachse kürzer als eine Längserstreckung des Filterbalgs in Richtung der Längsachse ist.

Vorteilhaft kann das Filterelement durch die wenigstens eine Einkerbung lagerichtig verbaut werden. Die wenigstens eine Einkerbung gibt eine Positionierung des Filterelements eindeutig vor. Die Filterfläche bleibt trotz der wenigstens einen Einkerbung nahezu unverändert. Bevorzugt ist das Filterelement zum Filtern eines gasförmigen Fluids vorgesehen, vorzugsweise zum Filtern von Luft.

Erfindungsgemäß beginnt die zumindest eine Einkerbung an der Endscheibe und erstreckt sich in Längsrichtung von der Endscheibe weg. Dies erlaubt mehrere Varianten zur Herstellung der wenigstens einen Einkerbung beispielsweise bei der Herstellung der Endscheibe.

Nach einer günstigen Ausgestaltung des Filterelements kann der Filterbalg wenigstens zwei Einkerbungen aufweisen. Vorteilhaft können die beiden Einkerbungen an unterschiedlichen Enden des Filterbalgs angeordnet sein. Weiterhin vorteilhaft können die beiden Einkerbungen auf der Mantelfläche des Filterbalgs zueinander versetzt angeordnet sein. So können gehäuseseitige Gegenkonturen in einem Deckel und einem Gehäusetopf vorgesehen sein, so dass eine Montage des Filterelements einfach vonstattengehen kann. Beispielsweise können die beiden Einkerbungen um 180° versetzt oder im einen anderen Winkel versetzt angeordnet sein.

Nach einer günstigen Ausgestaltung des Filterelements können die Falten im Bereich um die Einkerbung und/oder in der Einkerbung unterbrechungsfrei ausgeführt sein. Vorteilhaft sind die Falten im Bereich der Einkerbung durchgehend wie im Rest des Filterbalgs.

Nach einer günstigen Ausgestaltung des Filterelements kann die wenigstens eine Einkerbung als Aufweitung zwischen zwei Falten in radialer und/oder axialer Richtung ausgebildet sein. Die Bildung der Einkerbung kann schonend für den Filterbalg durchgeführt werden.

Nach einer günstigen Ausgestaltung des Filterelements kann die wenigstens eine Einkerbung durch eine Einkerbstruktur in einem Werkzeug beim Herstellen einer Endscheibe des Filterelements gebildet sein. Vorteilhaft kann eine Gießschale eine Einkerbstruktur aufweisen.

Nach einer günstigen Ausgestaltung des Filterelements kann die wenigstens eine Einkerbung durch eine Einkerbstruktur an einem Stützrohr des Filterbalgs gebildet sein. Die wenigstens eine Einkerbung kann beim Anbringen des Filterbalgs auf dem Stützrohr hergestellt werden.

Nach einer günstigen Ausgestaltung des Filterelements kann die wenigstens eine Einkerbung durch eine Einkerbstruktur eines Einlegeteils in der Endscheibe des Filterbalgs gebildet sein. Das Einlegeteil kann einfach bei der Bildung der Endscheibe in diese eingebettet und mit dem Filterbalg verbunden werden.

Nach einer günstigen Ausgestaltung des Filterelements können die Falten wenigstens bereichsweise durch Fixierelemente mit einem konstanten, insbesondere äquidistanten, Abstand zueinander gehalten sein. Das Filterelement kann weitgehend in üblicher Herstellungsweise hergestellt werden.

Nach einem weiteren Aspekt der Erfindung wird ein Filtersystem mit einem Gehäuse mit einem Fluideinlass und einem Fluidauslass und einem im Gehäuse angeordneten, wechselbaren Filterelement vorgeschlagen. Das Filterelement ist zum Filtern eines, insbesondere gasförmigen, Fluids vorgesehen und weist eine Längsachse auf, umfassend einen um die Längsachse angeordneten Filterbalg, der einen Innenraum umschließt, mit einem stirnseitigen ersten Ende und einem diesem gegenüberliegenden stirnseitigen zweiten Ende, mit einer zum Innenraum geöffneten Endscheibe am ersten Ende und einer geschlossenen Endscheibe am gegenüberliegenden zweiten Ende. Der Filterbalg weist Falten auf, deren radial äußeren Faltenkanten in seiner äußeren Mantelfläche liegen. Der Filterbalg weist zumindest an einem seiner stirnseitigen Enden eine Einkerbung auf, deren axiale Länge in Richtung der Längsachse kürzer als eine Längserstreckung des Filterbalgs in Richtung der Längsachse ist und wobei die Einkerbung mit einem Gegenelement des Gehäuses zusammenwirkt.

Vorteilhaft kann das Filterelement über die korrespondierende Einkerbung insbesondere beim Einführen des Filterelements in das Gehäuse durch Reibschluss gehalten sein. Beim Einführen des Filterelements in das Gehäuse kann der Reibschluss, etwa bei schräger oder liegender Position des Filterelements einem Verkippen des Filterelements entgegenwirken. Beim Betrieb des Filterelements mit geschlossenem Gehäuse kann der Reibschluss aufgehoben sein.

Der Deckel kann das Filterelement in dem Filtergehäuse fixieren. Insbesondere kann das Filterelement in axialer Richtung zwischen einem Boden des Filtergehäuses und dem Deckel verspannt sein. Günstigerweise verläuft der Kraftfluss einer axialen Haltekraft für das Filterelement wie oben beschrieben durch ein Mittelrohr des Filterelements. Die erste Endscheibe und eine zweite Endscheibe des Filterelements können eine elastische Verformbarkeit in Längsrichtung des Filterelements einrichten, um eine definierte Haltekraft in axialer Richtung zu erhalten und ein vollständiges Schließen des Deckels zu erlauben. In radialer Richtung kann das Filterelement formschlüssig an dem Filtertopf und/oder an dem Deckel abgestützt sein.

Bevorzugt ist das Filtersystem zum Filtern eines gasförmigen Fluids vorgesehen, vorzugsweise zum Filtern von Luft. Bevorzugt ist das Filtersystem zum Einbau in ein Fahrzeug, insbesondere in ein Nutzfahrzeug, bevorzugt in ein schweres Nutzfahrzeug, vorgesehen.

Nach einer günstigen Ausgestaltung des Filtersystems können. Einlass und Auslass am gleichen Gehäuseteil angeordnet sein.

Dies erlaubt einen sehr kompakten Aufbau des Filtersystems. Günstigerweise kann ein Reinfluidkanal in einem Deckel des Gehäuses angeordnet sein. Damit kann das Filtersystem auch in beengten Bauräumen, insbesondere in einem Nutzfahrzeug, verbaut werden.

Auch wird ein Gehäuse für ein Filtersystem vorgeschlagen, bei dem wenigstens ein Gegenelement, insbesondere eine korrespondierende Einkerbung, an einem Gehäuseteil vorgesehen ist, das mit einer Einkerbung am Filterelement zusammenwirkt.

Günstigerweise kann ein Filterelement in schräger oder liegender Position in das Gehäuse lagerichtig positioniert werden und vor einem Verkippen geschützt werden. Dies ist insbesondere bei großen Filterelementen, wie sie in Nutzfahrzeugen eingesetzt werden und die im beladenen Zustand ein hohes Gewicht aufweisen, vorteilhaft. Günstigerweise kann das Gehäuse in kompakter Ausführung Einlass und Auslass am gleichen Gehäuseteil aufweisen. Ferner kann ein Reinfluidkanal im Deckel des Gehäuses angeordnet vorgesehen sein, so dass der Deckel auf der Reinseite des Filtersystems angeordnet sein kann. Dies kann bei beengten Raumverhältnissen in Nutzfahrzeugen günstig sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: ein Filterelement nach einem ersten Ausführungsbeispiel der Erfindung mit aufgeweiteten Falten an einem Ende des Filterelements;
- Fig. 2: das Filterelement nach Figur 1 mit aufgeweiteten Falten am entgegengesetzten Ende des Filterelements;
- Fig. 3: eine Draufsicht auf eine geschlossene Endscheibe des Filterelements nach Figur 1;
- Fig. 4: ein Detail des Filterelements nach Figur 1 an seiner geschlossenen Endscheibe;
- Fig. 5: ein Detail des Filterelements nach Figur 1 an seiner offenen Endscheibe;
- Fig. 6: einen Längsschnitt durch das Filterelement nach Figur 1;
- Fig. 7: einen Längsschnitt durch ein Filtersystem mit Gehäuse, in das ein Filterelement nach Figur 1 eingesetzt ist;
- Fig. 8: eine Draufsicht auf das Filtersystem nach Figur 7;
- Fig. 9: ein Detail des Filtersystems nach Figur 7 an seiner geschlossenen Endscheibe;
- Fig. 10: ein Detail des Filtersystems nach Figur 7 an seiner offenen Endscheibe;
- Fig. 11: eine isometrische Ansicht des Filtersystems nach Figur 7 von einer ersten Seite;
- Fig. 12: eine isometrische Ansicht des Filtersystems nach Figur 7 von einer der ersten Seite gegenüberliegenden zweiten Seite;
- Fig. 13: eine Explosionsdarstellung des Filtersystems nach Figur 7;
- Fig. 14: ein Filterelement nach einem weiteren Beispiel der Erfindung mit einem Ring zum lokalen Aufweiten von Abständen zwischen Falten des Faltenbalgs vor dem Aufbringen der Endscheibe;
- Fig. 15: das Filterelement nach Figur 14 mit geschäumter Endscheibe;
- Fig. 16: einen Längsschnitt durch das Filterelement nach Figur 14;
- Fig. 17: eine Draufsicht auf das Filterelement nach Figur 14;
- Fig. 18: ein Detail des Filterelements nach Figur 14 an einer Endscheibe;
- Fig. 19: eine Draufsicht auf einen Ring für ein Filterelement nach Figur 14;
- Fig. 20: eine isometrische Ansicht des Rings nach Figur 19;
- Fig. 21: ein Filterelement nach einem weiteren Beispiel der Erfindung mit einem Stützrohr zum lokalen Aufweiten von Abständen zwischen Falten des Faltenbalgs;
- Fig. 22: einen Längsschnitt durch das Filterelement nach Figur 21;
- Fig. 23: eine Draufsicht auf das Filterelement nach Figur 21;
- Fig. 24: ein Detail des Filterelements nach Figur 21 an einer Endscheibe;
- Fig. 25: einen Längsschnitt durch ein Stützrohr für das Filterelement nach Figur 21;
- Fig. 26: eine isometrische Ansicht des Stützrohrs nach Figur 25;
- Fig. 27: eine Draufsicht auf das Stützrohr nach Figur 25;
- Fig. 28: ein Detail des Stützrohrs nach Figur 25;
- Fig. 29: einen Längsschnitt durch ein Filterelement nach einem Ausführungsbeispiel der Erfindung;
- Fig. 30: ein Detail des Filterelements nach Figur 29 an dessen offener Endscheibe;
- Fig. 31: ein weiteres Detail des Filterelements nach Figur 29 an dessen offener Endscheibe;
- Fig. 32: eine perspektivische Ansicht des Filterelements aus Figur 29 von seiner offenen Endscheibe her gesehen;
- Fig. 33: eine perspektivische Ansicht des Filterelements nach Figur 29 von seiner geschlossenen Endscheibe her gesehen;
- Fig. 34: ein Stützrohr für ein Filterelement nach Figur 29;
- Fig. 35: eine Gießschale zum Schäumen einer geschlossenen Endscheibe für ein Filterelement nach Figur 29;
- Fig. 36: eine Gießschale zum Schäumen einer offenen Endscheibe für ein Filterelement nach Figur 29;
- Fig. 37: ein Flussdiagramm eines Verfahrens zur Herstellung eines Filterelements nach einem Ausführungsbeispiel der Erfindung;
- Fig. 38: eine Explosionsdarstellung eines Filtersystems nach einem Ausführungsbeispiel der Erfindung mit dem Filterelement nach Figur 29;
- Fig. 39: einen Längsschnitt durch das Filtersystem nach Figur 38;
- Fig. 40: einen Längsschnitt durch ein Detail des Filtersystems nach Figur 38 mit Montagehilfen;
- Fig. 41: eine perspektivische Ansicht des Filtersystems nach Figur 38 mit einem geöffneten Gehäuse mit einem eingesetzten Filterelement nach Figur 29;
- Fig. 42: eine perspektivische Ansicht des Gehäuses des Filtersystems nach Figur 38;
- Fig. 43: einen Querschnitt durch das Filtersystem nach Figur 38 mit eingesetztem Filterelement nach Figur 29;
- Fig. 44: eine perspektivische Ansicht des Filtersystems nach Figur 38 mit einem geöffneten Gehäuse mit einem eingesetzten Filterelement nach Figur 29 unter anderem Blickwinkel;
- Fig. 45: eine perspektivische Ansicht des Innenraums des Gehäuses des Filtersystems nach Figur 38 mit Noppenaufnahmen;
- Fig. 46: das Filterelement nach Figur 29 beim Einführen in das Gehäuse des Filtersystems nach Figur 38;
- Fig. 47: eine isometrische Ansicht einer Außenseite eines Deckels des Gehäuses des Filtersystems nach Figur 38;
- Fig. 48: eine isometrische Ansicht einer Innenseite eines Deckels des Gehäuses des Filtersystems nach Figur 38;
- Fig. 49: ein Detail des Längsschnitts durch das Filtersystem nach Figur 39 an dessen Reinseite mit geschlossenem Deckel;
- Fig. 50: einen Längsschnitt durch ein Detail des Schnitts nach Figur 39;
- Fig. 51: ein Filtersystem nach einem weiteren Ausführungsbeispiel der Erfindung mit Deckel und Dichtung in expandierter Ansicht;
- Fig. 52: eine Explosionsdarstellung von Dichtung und Deckel des Filtersystems nach Figur 51;
- Fig. 53: eine perspektivische Ansicht des Zusammenbaus von Deckel und Dichtung nach Figur 52;
- Fig. 54: eine Seitenansicht des Filtersystems nach Figur 51;
- Fig. 55: einen Längsschnitt durch das Filtersystem nach Figur 51;
- Fig. 56: einen Schnitt durch ein Detail eines Reinfluidanschlusses des Deckels des Filtersystems nach Figur 51;
- Fig. 57: einen Schnitt durch ein Detail einer Rohfluidseite des Deckels des Filtersystems nach Figur 51.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

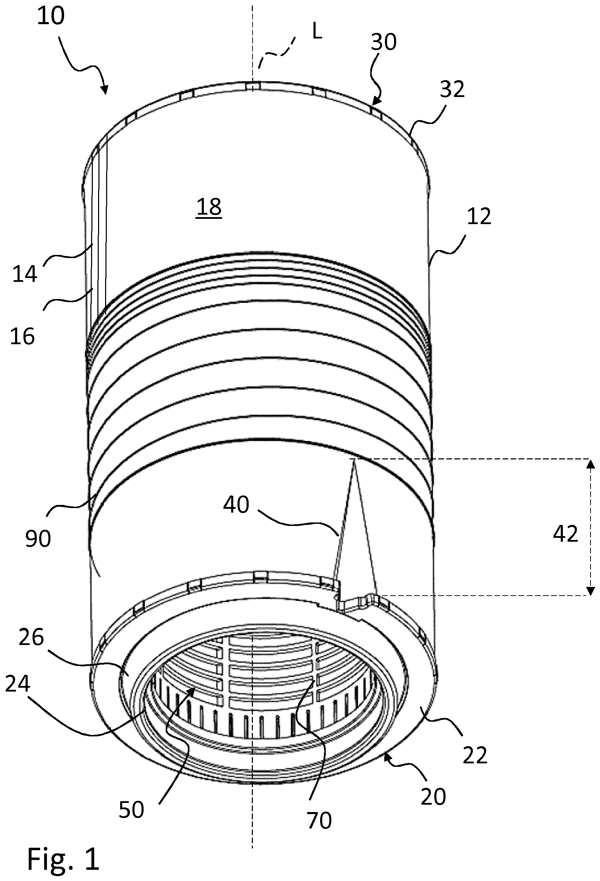

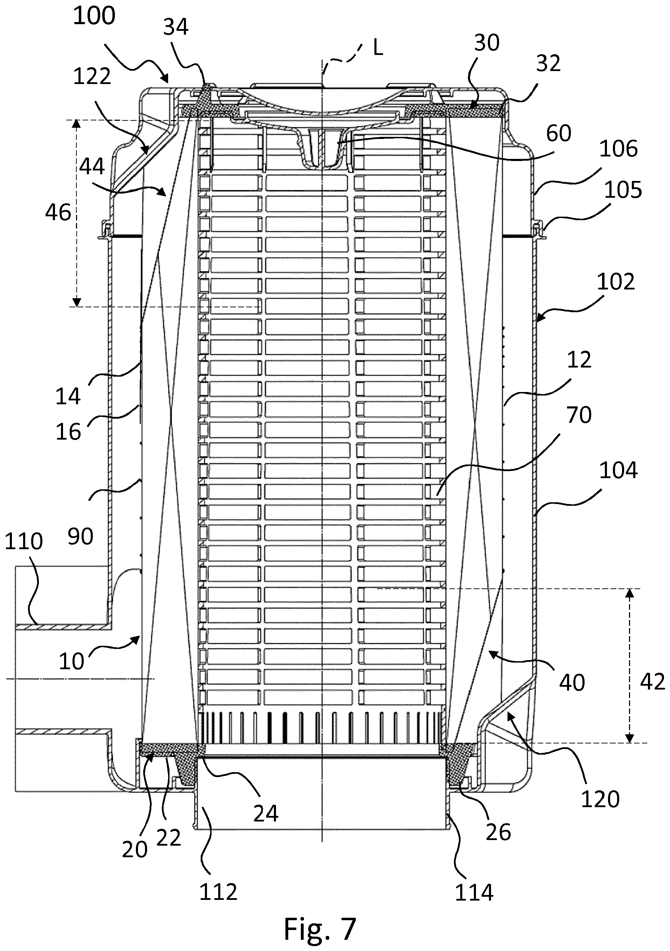

Die Figuren 1 bis 13 illustrieren ein erstes Ausführungsbeispiel der Erfindung mit einem Filterelement 10 (Figuren 1-6) und einem Filtergehäuse 102 sowie Filtersystem 100 (Figuren 7 bis 13).

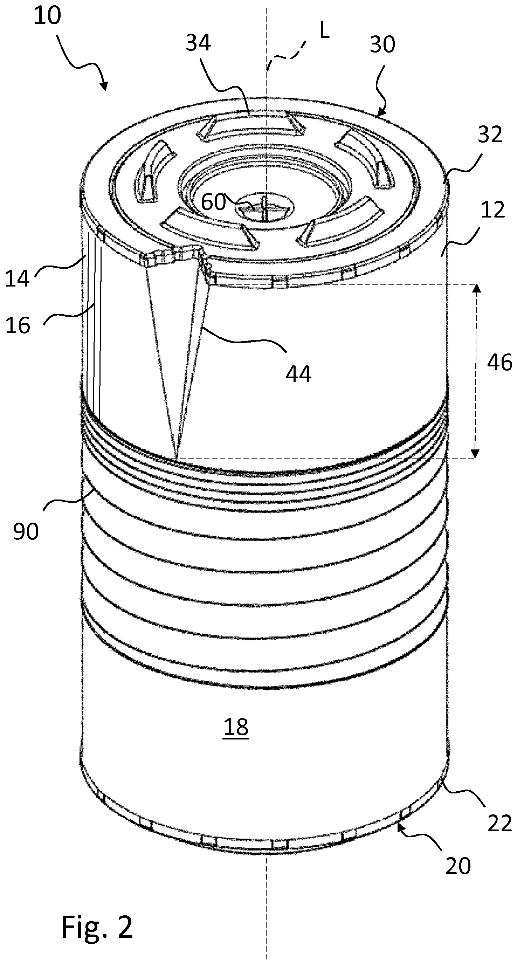

Wie den Figuren 1 und 2 zu entnehmen ist, weist das Filterelement 10 einen Filterbalg 12 auf, der sich entlang einer Längsachse L erstreckt und einen Innenraum 50 umgibt.

Der Filterbalg 12 ist beispielsweise aus einem gefalteten Filtermaterial gebildet, das zu einem in sich geschlossenen Filterbalg 12 gebildet und auf einem Stützrohr 70 angeordnet ist. Das Stützrohr 70 kann eine nach innen weisende Rippe aufweisen.

Die Falten 14 sind in den Figuren 1 und 2 lediglich beispielhaft angedeutet und erstrecken sich über die gesamte Länge des Filterbalgs 12. Die Längskanten 16 der Falten 14 liegen in einer äußeren Mantelfläche 18 des Filterbalgs 12. Der Filterbalg 12 ist in diesem Beispiel als Rundelement ausgebildet.

An einem stirnseitigen ersten Ende 20 und einem diesem gegenüberliegenden stirnseitigen zweiten Ende 30 des Filterelements 10 sind Endscheiben 22, 32 angeordnet, welche den Filterbalg 12 an seinen Stirnkanten abdichten. Die Endscheiben 22, 32 können in üblicher Weise beispielsweise aus geschäumtem Polyurethan gebildet sein.

Am ersten Ende 20 ist eine zum Innenraum 50 geöffnete Endscheibe 22 angeordnet. Am gegenüberliegenden zweiten Ende 30 ist eine geschlossene Endscheibe 32 angeordnet. Die geschlossene Endscheibe 32 weist nach außen abstehende kreissegmentartige Abstandsnoppen 34 auf, die einen in den Innenraum 50 weisenden Dorn 60 auf einem konstanten Radius umgeben. Die Abstandsnoppen 34 können zur Abstützung des Filterelements 10 in einem Gehäuse dienen.

Die geöffnete Endscheibe 22 weist einen nach außen weisenden Ring 26 auf, der die Öffnung 24 in der Endscheibe 22 umgibt. Der Ring 26 kann als Dichtung dienen. Vorzugsweise sind Endscheibe 22 und Ring 26 einstückig ausgebildet. Insbesondere kann die Endscheibe mit dem Ring 26 aus Polyurethan gebildet sein.

Die Strömungsrichtung des zu filternden Fluids ist durch den Filterbalg 12 gerichtet. Ist dessen Reinseite innen vorgesehen, strömt das Fluid von der Außenseite des Filterbalgs 12 in den Innenraum 50 und von dort durch die Öffnung 24 aus dem Filterelement 10 hinaus. Optional kann die Durchströmungsrichtung auch umgekehrt vorgesehen sein.

Der Filterbalg 12 weist an beiden seiner Enden 20, 30 jeweils eine Einkerbung 40, 44 auf, deren axiale Länge 42, 46 in Richtung der Längsachse L kürzer als die Längserstreckung des Filterbalgs 12 in Richtung der Längsachse L ist. Die Einkerbungen 40, 44 sind lokal begrenzt und erstrecken sich nicht über die gesamte Länge des Faltenbalgs 12. Erfindungsgemäß haben die Einkerbungen 40, 44 den größten Faltenkantenabstand an den jeweiligen Endscheiben 22, 32 und verjüngen sich mit zunehmendem Abstand von der Endscheibe 22, 32.

Die Einkerbungen 40, 44 weiten den Abstand zwischen zwei benachbarten Falten auf, wobei die Falten 14 sich insgesamt über die gesamte Länge des Faltenbalgs 12 erstrecken.

Vorzugsweise sind die Einkerbungen 40, 44 am Umfang versetzt angeordnet, beispielsweise um 180° versetzt auf diametral gegenüberliegenden Seiten des Faltenbalgs 12. Die Einkerbungen können auch um andere Winkel als 180° gegeneinander versetzt sein.

Zwischen den Einkerbungen 40, 44 können Fixierelemente 90 vorgesehen sein, welche gewährleisten, dass in diesem Bereich der Abstand zwischen den Falten 14 konstant gehalten ist. Es können optional übliche Fixierelemente 90 wie Fadenwickel, Leimraupen, Raupen von Schmelzklebstoff, Prägungen ("Pleatlock") quer zu den Längskanten 16 der Falten 14 und dergleichen vorgesehen sein.

Die Einkerbungen 40, 44 können auf unterschiedliche Weise erzeugt werden. Sie können in den Filterbalg 12 eingebracht werden, nachdem die optionalen Fixierelemente 90 bereits angebracht wurden. Die Einkerbungen 40, 44 können beim Herstellen der Endscheiben 22, 32 in den Filterbalg 12 eingebracht werden oder durch Einlegeteile oder Spreizelemente am Stützrohr und dergleichen. Die beiden Einkerbungen 40, 44 am Filterbalg 12 können auf gleiche Weise oder mit unterschiedlichen Methoden gebildet werden.

Es kann optional vorgesehen sein, dass nur eine Einkerbung 40 oder 44 am Filterelement 10 vorhanden ist.

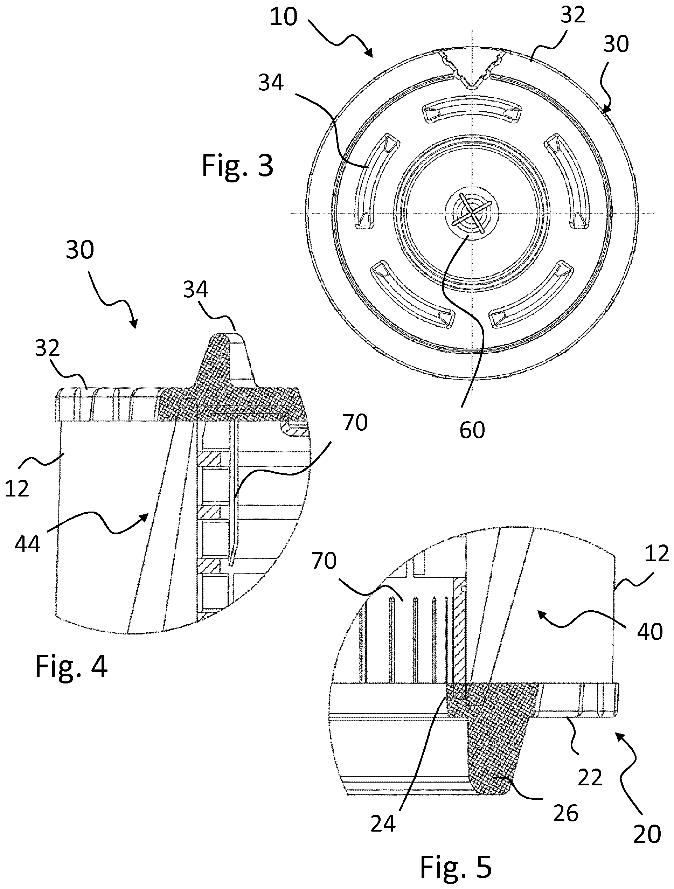

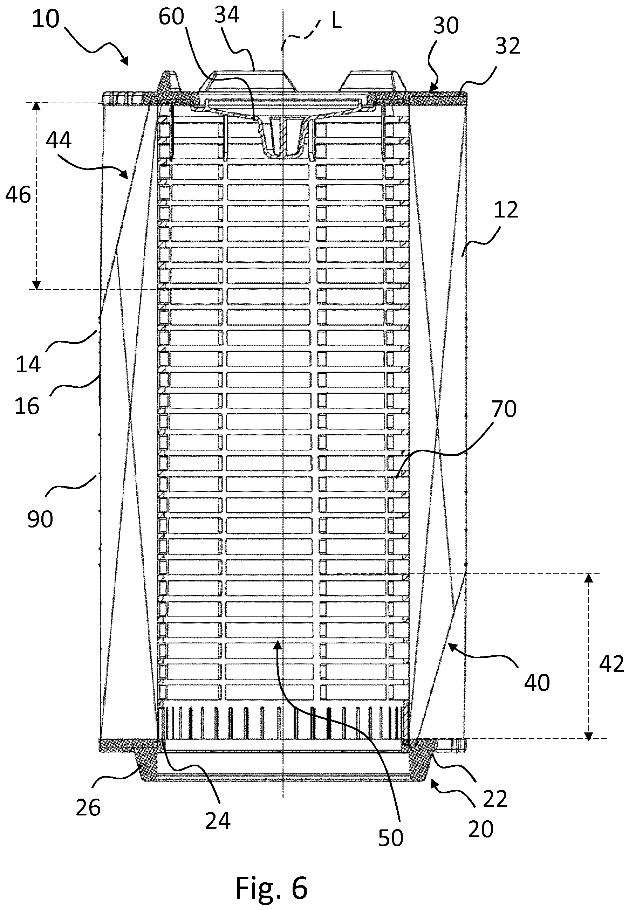

Wie in den Figuren 3 bis 6 zu sehen ist, sind gehen die Einkerbungen 40, 44 von einer Kerbe in den Endscheiben 22, 32 aus. Figur 3 zeigt eine Draufsicht auf die geschlossene Endscheibe 32 des Filterelements 10 nach Figur 1, Figur 4 ein Detail des Filterelements 10 an seiner geschlossenen Endscheibe 32 und Figur 5 ein Detail des Filterelements 10 an seiner offenen Endscheibe 22. Figur 6 zeigt einen Längsschnitt durch das Filterelement 10 nach Figur 1.

Die Kerbe kann vorteilhaft bei der Montage des Filterelements 10 einen Reibschluss gegen ein Gegenelement in einem Gehäuse 102 bewirken und die Gefahr des Verkippens des Filterelements 10 beim Einbau in das Gehäuse 102 reduzieren.

Die Einkerbungen 40, 44 werden durch das Material der Endscheibe 22, 32 in Form gehalten.

Dabei ist es möglich, dass die Endscheibe 22, 32 in der Kerbe einen geringen Überstand gegenüber den durch die jeweilige Einkerbung 40, 44 gespreizten Falten aufweist. Dies ermöglicht eine Verpressung der Einkerbungen 40, 44 beim Einbau in ein Gehäuseteil, das eine den Einkerbungen 40, 44 jeweils entsprechende Gegenkontur aufweist.

Optional kann auch nur eine der Endscheiben 22, 32 eine Kerbe aufweisen wenn im an die Endscheiben 22, 32 angrenzenden Bereich des Filterbalgs 12 Einkerbungen 40, 44 vorgesehen sind. Dies ermöglicht, den Rand der kerbenlosen Endscheibe zur radialen Abdichtung einzusetzen.

Die geschlossene Endscheibe 32 weist in diesem Ausführungsbeispiel eine nach innen gewölbte Fläche auf, in deren Mitte der in den Innenraum 50 ragende Dorn 60 angeordnet ist.

Die Einkerbungen 40, 44 erlauben einen lagerichtigen Einbau des Filterelements 10 in ein Gehäuse. Im Zusammenwirken mit dem Dorn 60 kann erreicht werden, dass eine stabile Positionierung des Filterelements 10 erreicht wird. Besonders vorteilhaft ist dies, wenn das Filterelement 10 in ein liegendes Gehäuse eingebaut wird. Die Einkerbungen 40, 44 und der Dorn 60 verhindern ein Verkippen des Filterelements 10.

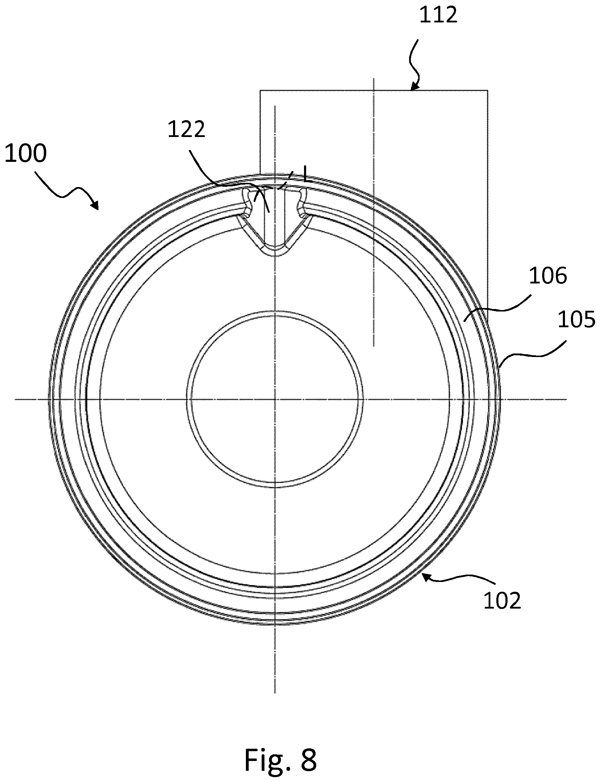

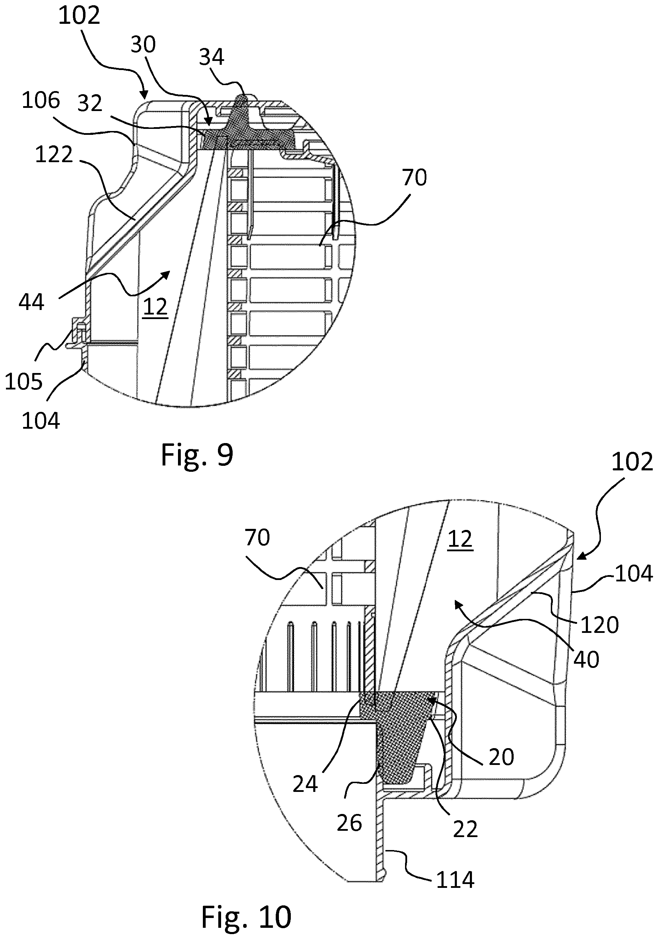

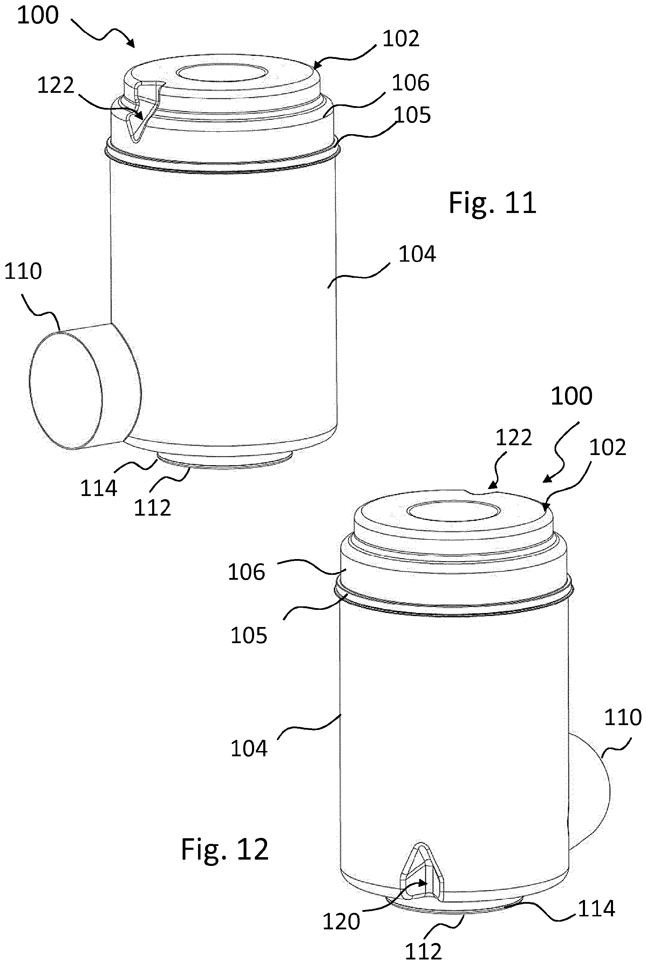

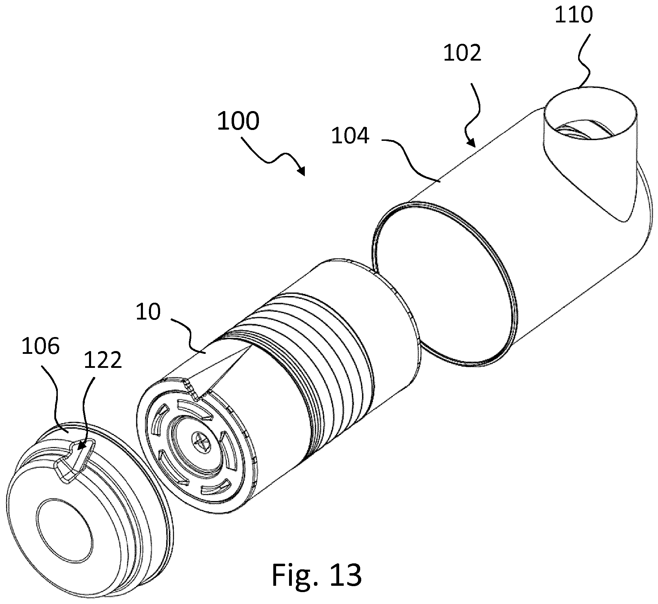

Das Filtersystem 100 mit Gehäuse 102 ist in den Figuren 7 bis 13 dargestellt. Dabei zeigt Figur 7 einen Längsschnitt durch das Filtersystem 100 mit Gehäuse 102, in das ein Filterelement 10 nach Figur 1 eingesetzt ist. Figur 8 zeigt eine Draufsicht auf das Filtersystem 100, und die Figuren 9 und 10 zeigen Details des Filtersystems 100 an der geschlossenen Endscheibe 32 und an der offenen Endscheibe 22 des Filterelements 10. Figur 11 zeigt eine isometrische Ansicht des Filtersystems 100 von einer ersten Seite, und Figur 12 zeigt eine isometrische Ansicht des Filtersystems 100 von einer der ersten Seite gegenüberliegenden zweiten Seite. Figur 13 zeigt eine Explosionsdarstellung des Filtersystems 100.

Das Gehäuse 102 besteht aus einem ersten Gehäuseteil 104, beispielsweise einem Gehäusetopf, und einem zweiten Gehäuseteil 106, beispielsweise einem Deckel. Die beiden Gehäuseteile 104, 106 sind an einer Verbindung 105 miteinander, insbesondere lösbar, verbunden. Das zweite Gehäuseteil 106 weist an seiner Stirnseite eine nach innen gewölbte Fläche auf, die mit der gewölbten Stirnseite der geschlossenen Endscheibe 32 des Filterelements 10 korrespondiert.

Das Gehäuse 102 weist jeweils eine korrespondierende Einkerbung 120, 122 passend zu den Einkerbungen 40, 44 des Filterelements 10 an dessen erster, offener Endscheibe 22 und dessen zweiter, geschlossener Endscheibe 32 auf. Dies ist in der Draufsicht auf das Gehäuse 102 in Figur 8 zu erkennen. Die Einkerbung 122 ist im Gehäuse 102 korrespondierend zur Einkerbung 44 am Ende 30 mit der geschlossenen Endscheibe 32 vorgesehen.

Das Gehäuse 102 weist einen ersten Fluidanschluss 110, beispielsweise einen Lufteinlass, und einen zweiten Fluidanschluss 112, beispielsweise einen Luftauslass, auf. Der erste Fluidanschluss 110 ist tangential an dem ersten Gehäuseteil 104 des Gehäuses 102 angeordnet, so dass das Fluid beispielsweise tangential in das Gehäuse 102 eintreten kann. Der zweite Fluidanschluss 112 ist als zentraler Stutzen 114 am ersten Gehäuseteil 104 ausgebildet, der sich in Längsrichtung L vom Filterelement 10 weg erstreckt.

Wie Figur 9 zeigt, liegen die Abstandsnoppen 34 der geschlossenen Endscheibe 32 an der Innenseite des zweiten Gehäuseteils 106 an und erlauben in axialer Richtung ein sicheres Einspannen des Filterelements 10 bei geschlossenem Gehäuse 102. Dies erlaubt eine Verbesserung der Stabilität bei Vibrationen im Betrieb des Filterelements 10. Die Einkerbung 122 greift dabei zumindest teilweise in die Einkerbung 44 des Filterelements 10 ein.

Die offene Endscheibe 22 des Filterelements 10 umgreift mit dem Ring 26 einen in den Innenraum 50 ragenden Rand des Stutzens 114 und dichtet radial nach innen gegen den Rand ab, wie in Figur 10 zu sehen ist. Die Einkerbung 120 greift dabei zumindest teilweise in die Einkerbung 40 des Filterelements 10 ein.

In den Figuren 11 und 12 sind die Seitenansichten des Filtersystems 100 zu sehen, welche die diametral entgegengesetzte Lage der Einkerbungen 120, 122 im ersten und zweiten Gehäuseteil 104, 106 erkennen lassen.

Die Explosionsdarstellung in Figur 13 zeigt die Komponenten Gehäusetop 104, Filterelement 10 und Gehäusedeckel 106 des Filtersystems 100. Das Filterelement 10 kann durch die Einkerbungen 40, 44 und die Einkerbungen 120, 122 im Gehäuse 102 lageorientiert in das Gehäuse 102 eingesetzt werden.

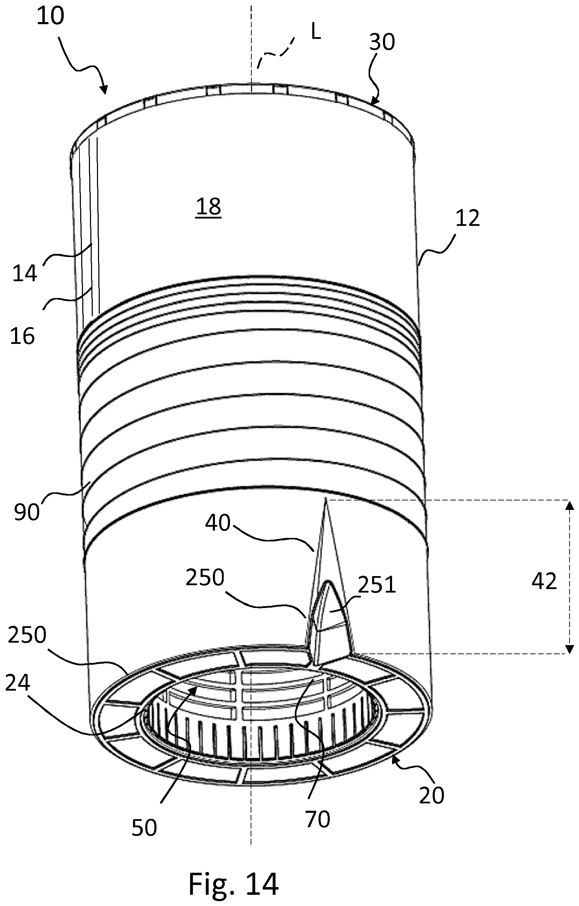

Die Figuren 14 bis 20 zeigen ein weiteres Ausführungsbeispiel der Erfindung mit einer ersten Herstellungsmöglichkeit von einer oder mehreren Einkerbungen 40 in einem Filterelement 10. In dieser Variante wird die Einkerbung 40 im Filterbalg 12 des Filterelements 10 durch ein Einlegeteil 250 erzeugt, das eine Einkerbstruktur 252 aufweist, die in den Filterbalg 12 zwischen zwei Falten eingreift und diese aufspreizt. Der Einlegering 250 kann beispielsweise beim Herstellen der geschäumten, beispielsweise offenen Endscheiben 22 in eine Gießform gelegt werden und auf diese Weise mit der Endscheibe 22 und dem Filterbalg 12 verbunden werden.

Die weiteren Elemente des Filterelements 10 entsprechen denen des vorherigen Ausführungsbeispiels der Figuren 1 bis 13, auf das zur Vermeidung unnötiger Wiederholungen verwiesen wird.

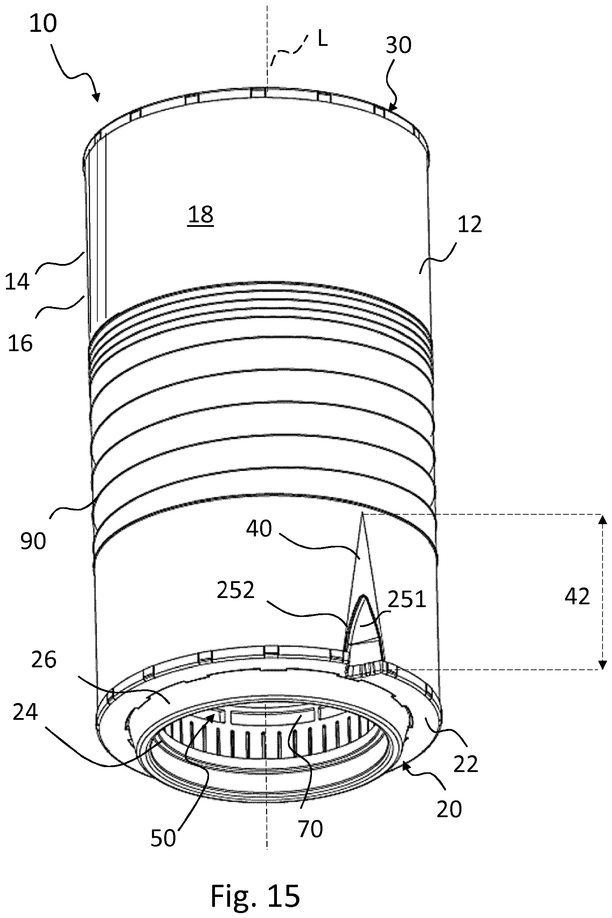

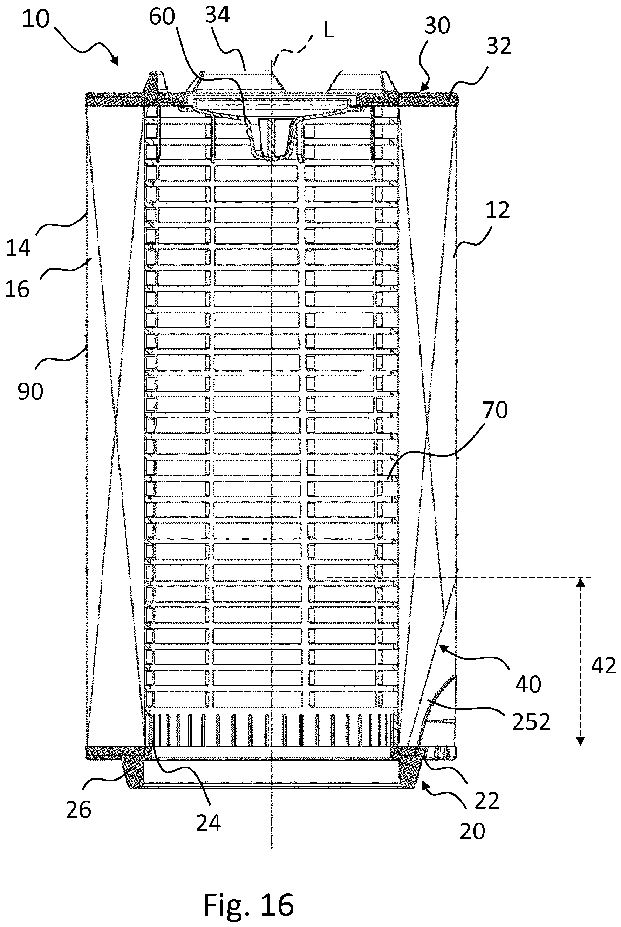

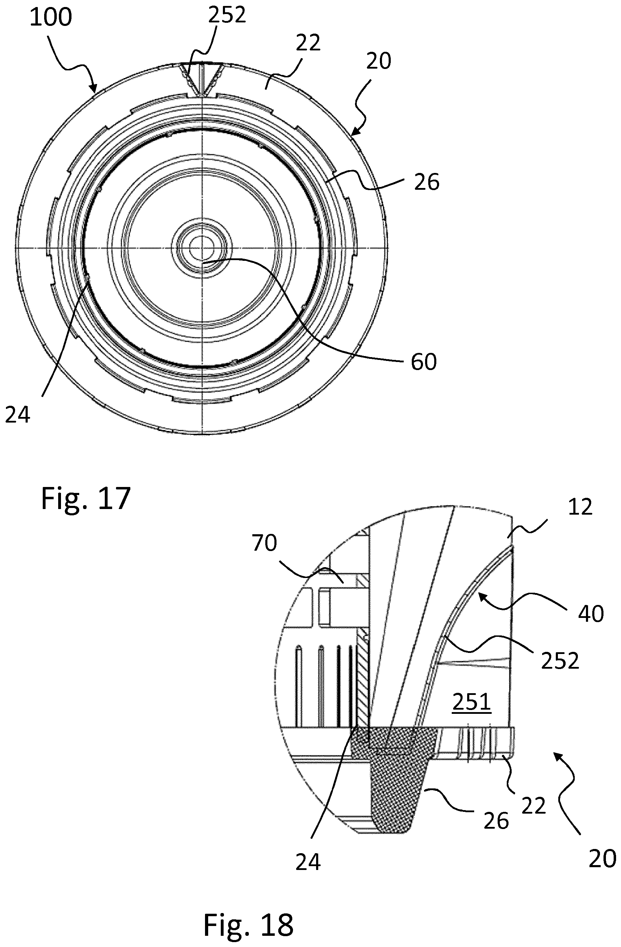

Figur 14 zeigt das Filterelement 10 nach einem weiteren Beispiel der Erfindung mit einem Ring 250 zum lokalen Aufweiten eines Abstands zwischen Falten 14 des Faltenbalgs 12 vor dem Aufbringen der Endscheibe 22. Figur 15 zeigt das Filterelement 10 mit geschäumter Endscheibe 22 und eingebettetem Einlegering 250. Figur 16 zeigt einen Längsschnitt durch das Filterelement 10 mit dem Einlegering 250 in der offenen Endscheibe 22. Figur 17 zeigt eine Draufsicht auf die offene Endscheibe 22 des Filterelements 10, und Figur 18 zeigt ein Detail des Filterelements 10 im Verbindungsbereich Endscheibe 22, Filterbalg 12 und Einlegering 250.

Der Filterbalg 12 ist auf einem Stützrohr 70 angeordnet. Das Stützrohr 70 kann eine nach innen weisende Rippe aufweisen.

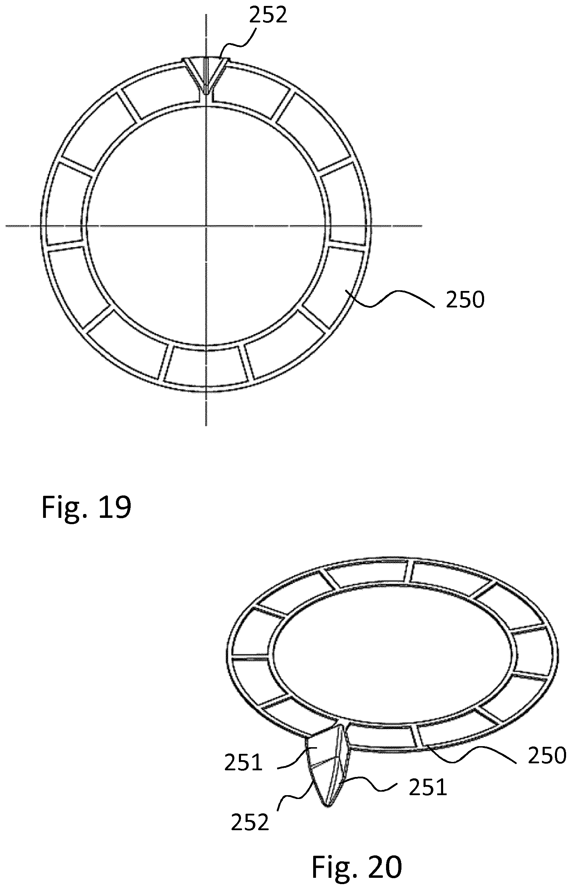

Die Figuren 19 und 20 zeigen verschiedene Ansichten des Einlegeringes 250. Die Einkerbstruktur 252 steht in axialer Richtung von der Ringfläche des Einlegeringes 250 ab. In radialer Richtung weist die Einkerbstruktur 252 praktisch keinen Überstand gegenüber der Ringfläche auf. Auf diese Weise kann die Einkerbstruktur 252 zwischen zwei Falten 14 greifen und diese auseinander drücken.

Die Einkerbstruktur 252 ist ungefähr keilförmig ausgebildet und umfasst zwei gewölbte, miteinander verbundene Flügel 251, die sich symmetrisch von ihrer Kontaktfläche nach außen erstrecken. Der Querschnitt durch die verbundenen Flügel 251 ist ungefähr V-förmig und ist ungefähr keilförmig ausgebildet, wobei die beiden Flügel 251 der Einkerbstruktur 252 in der Mitte der Keilform zusammenstoßen.

Die Vorderkante der Einkerbstruktur 252 ist gerade und verläuft parallel zu den Längskanten 16 der Falten 14 und fluchtet mit den Längskanten 16 der Falten 14. Die Rückseite der Einkerbstruktur 252 ist durch eine Rundung der Flügel 251 gerundet und läuft spitz nach außen zu. Durch die gerundete Verbindungsnaht und Fläche der Flügel 251 können die Falten 14 im Filterbalg 12 schonend aufgeweitet werden.

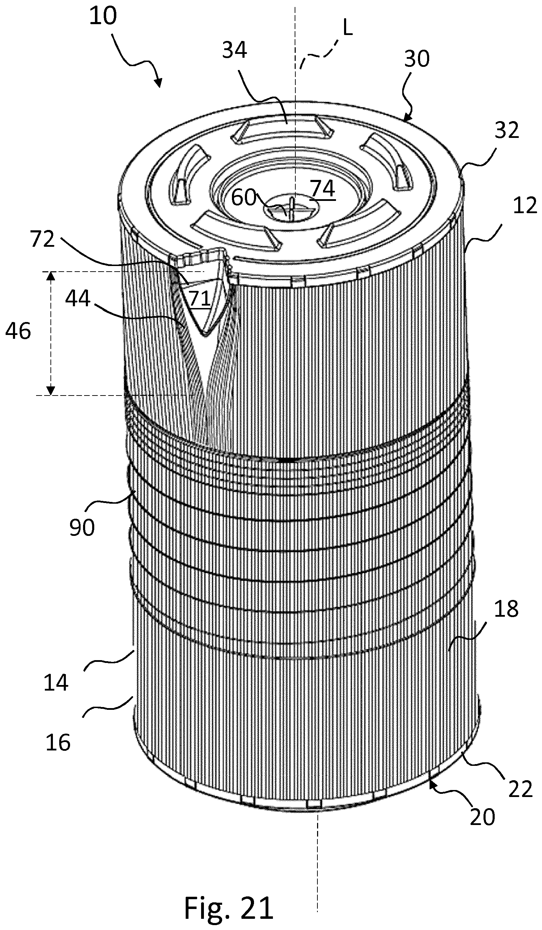

Die Figuren 21 bis 28 zeigen eine weitere Variante zur Herstellung wenigstens einer Einkerbung 44 im Faltenbalg 12 eines Filterelement 10, bei dem eine Einkerbstruktur 72 am Stützrohr 70 des Filterelements 10 vorgesehen ist. Das Stützrohr 70 kann eine nach innen weisende Rippe aufweisen.

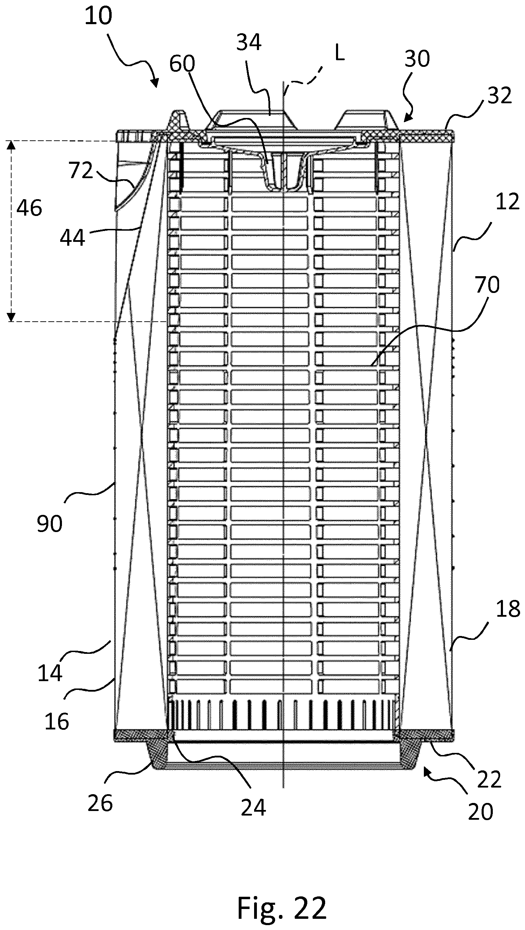

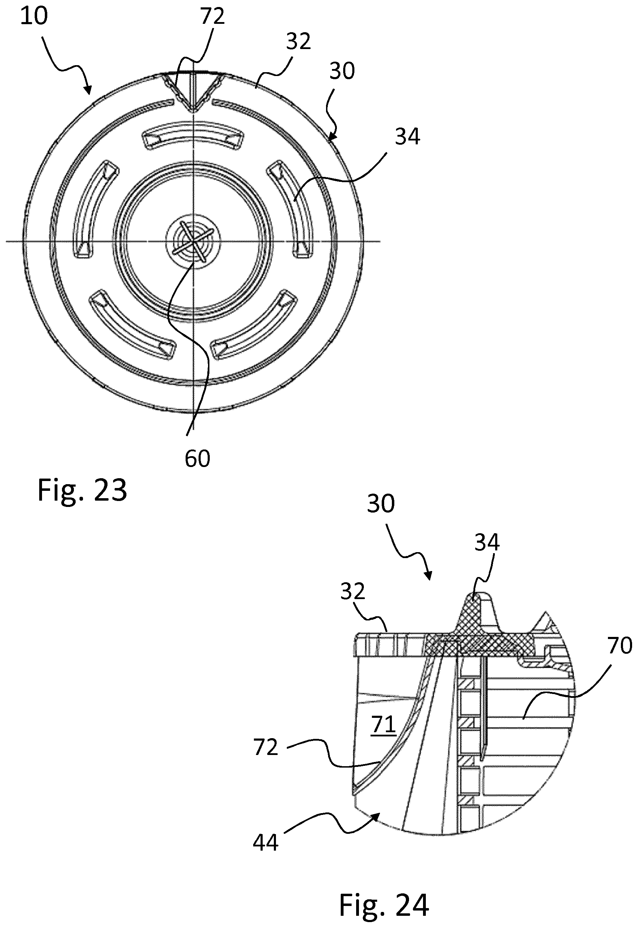

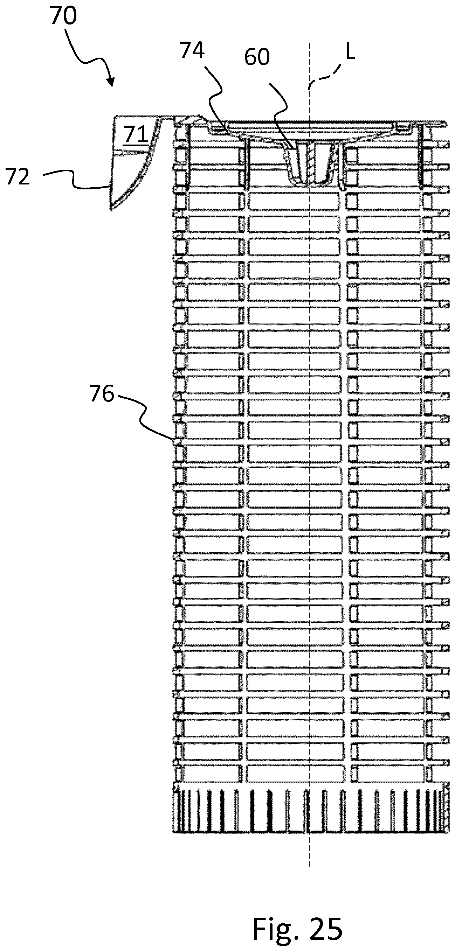

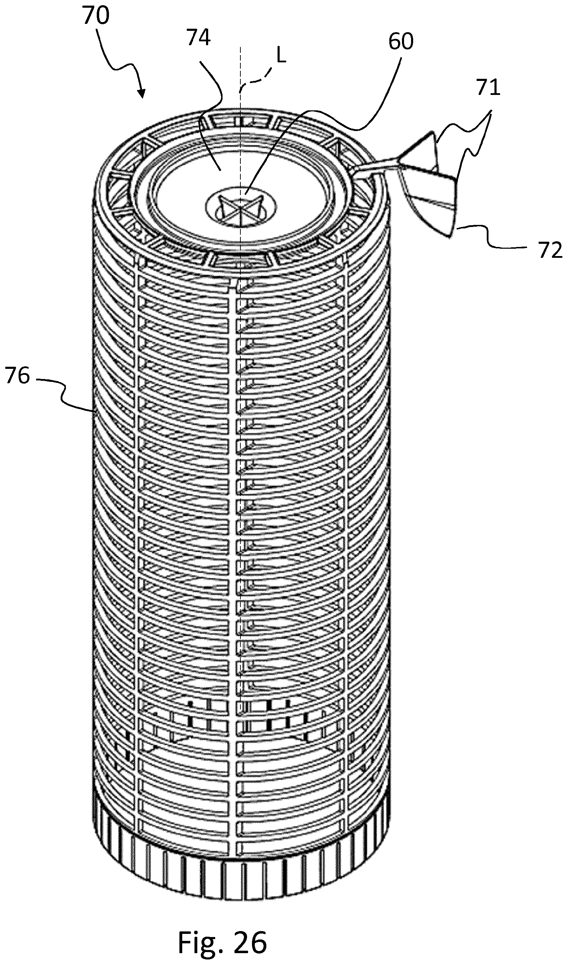

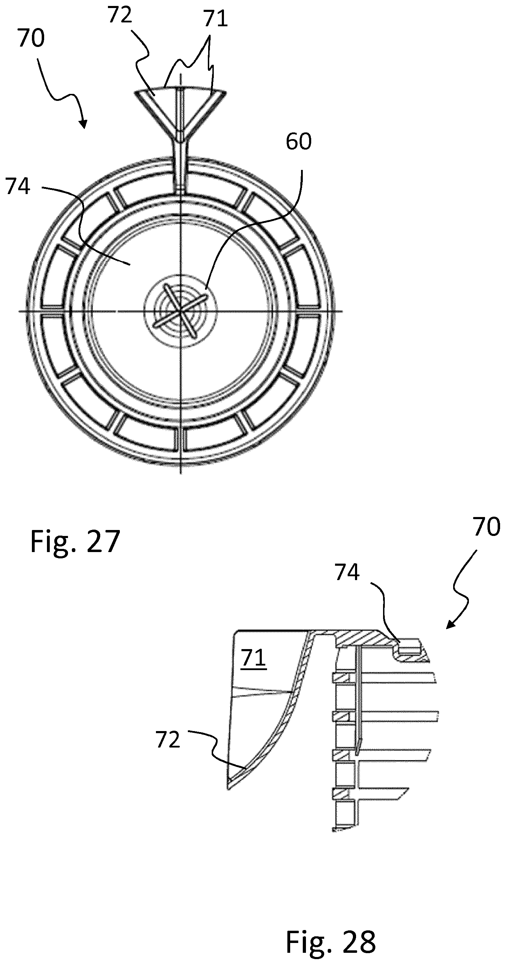

Figur 21 zeigt das Filterelement 10 mit dem Stützrohr 70, das zum lokalen Aufweiten von Abständen zwischen Falten 14 des Faltenbalgs 12 ausgebildet ist. Figur 22 zeigt einen Längsschnitt und Figur 23 eine Draufsicht auf das Filterelement 10. Figur 24 zeigt ein Detail des Filterelements 10 an seiner geschlossenen Endscheibe 32. Figur 25 zeigt einen Längsschnitt und Figur 26 eine isometrische Ansicht des Stützrohrs 70. Figur 27 zeigt eine Draufsicht auf das Stützrohr 70 und Figur 28 ein Detail des Stützrohrs 70.

Die weiteren Elemente des Filterelements 10 entsprechen denen des Ausführungsbeispiels der Figuren 1 bis 13, auf das zur Vermeidung unnötiger Wiederholungen verwiesen wird.

Wie den Figuren 21 und 22 zu entnehmen ist, wird die Einkerbung 44 im Filterbalg 12 an der geschlossenen Endscheibe 32 des Filterelements 10 durch eine Einkerbstruktur 72 des Stützrohrs 70 hervorgerufen. Generell ist das Stützrohr 70 an seinem geschlossenen Ende mit einer Scheibe 74 geschlossen. In diesem Beispiel ist die Einkerbstruktur 72 am geschlossenen Ende des Stützrohrs 70 angeordnet.

Die Einkerbstruktur 72 des Stützrohrs 70 greift zwischen zwei Falten 14 ein und weitet deren Abstand zueinander in radialer Richtung nach außen auf. In der Endscheibe 32 ist in dem Bereich der Einkerbstruktur 72 eine Kerbe ausgebildet.

Die Einkerbstruktur 72 steht in radialer Richtung entsprechend der Dicke des Filterbalgs 12 von dem Stützrohr 70 ab und ragt in axialer Richtung in den Filterbalg 12 hinein. Die Einkerbstruktur 72 ist ungefähr keilförmig ausgebildet und umfasst aus zwei gewölbte, miteinander verbundene Flügel 71, die sich symmetrisch von ihrer Kontaktfläche nach außen erstrecken.

Der Querschnitt durch die verbundenen Flügel 71 ist ungefähr V-förmig ausgebildet, wobei die beiden Flügel 71 der Einkerbstruktur 72 in der Mitte der Keilform zusammenstoßen. Die Flügel 71 sind etwas gerundet, so dass die Falten 14 im Filterbalg 12 schonend aufgeweitet werden können.

Die Vorderkante der Einkerbstruktur 72 ist gerade und verläuft parallel zu den Längskanten 16 der Falten 14 und fluchtet mit den Längskanten 16 der Falten 14. Die Rückseite der Einkerbstruktur 72 ist durch die Rundung der Flügel 71 gerundet und läuft spitz nach außen zu. Auf diese Weise kann die Einkerbstruktur 72 zwischen zwei Falten 14 des Filterbalgs 12 greifen und diese auseinander drücken. Durch die gerundete Verbindungsnaht und Fläche der Flügel 71 können die Falten 14 im Filterbalg 12 schonend aufgeweitet werden.

Filterbalg 12 mit Stützrohr 70 und Einkerbstruktur 72 werden beim Gießen der Endscheibe 32 innig miteinander verbunden.

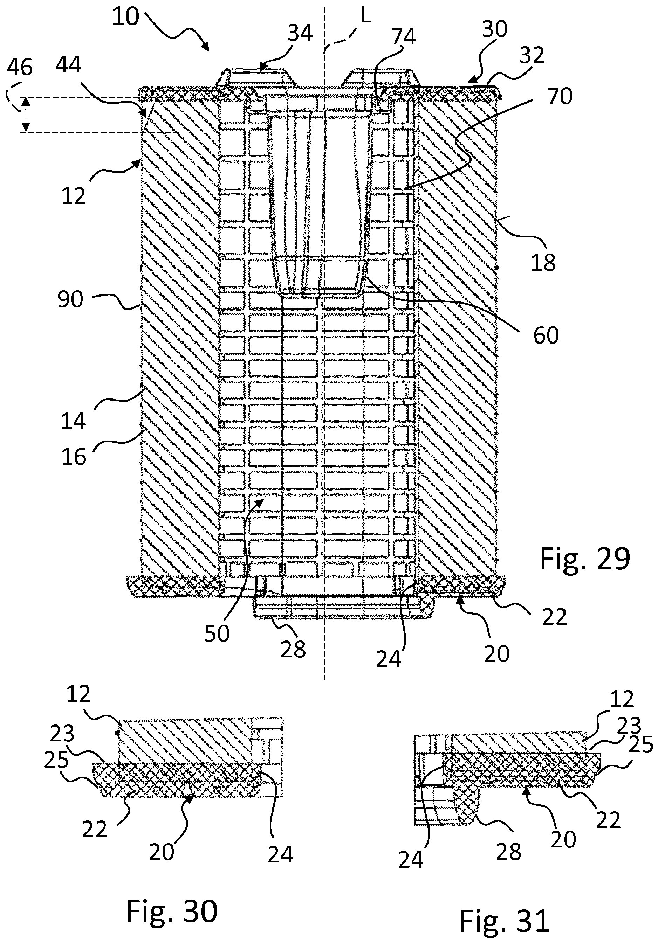

Die Figuren 29 bis 33 zeigen ein Filterelement 10 nach einem weiteren Ausführungsbeispiel der Erfindung mit einer Variante einer offenen Endscheibe 22.

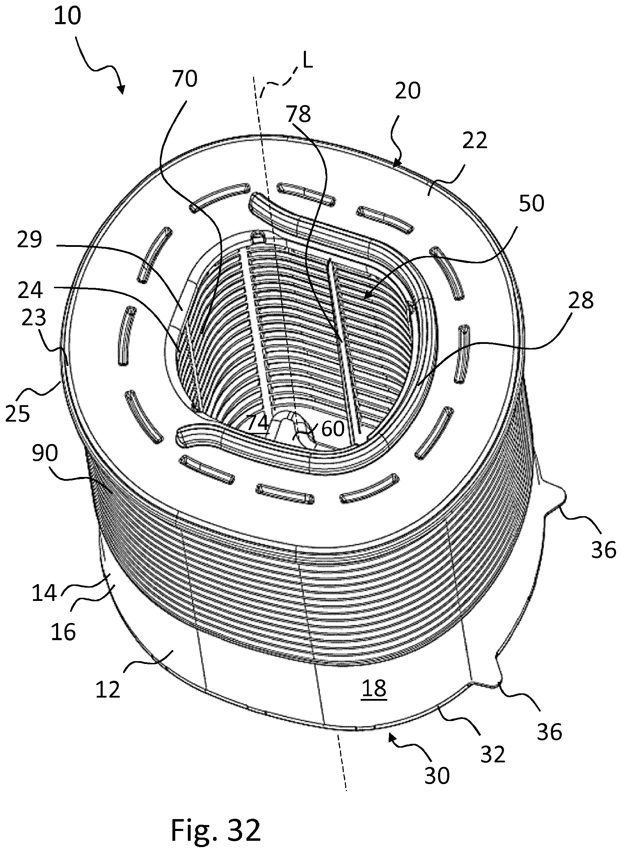

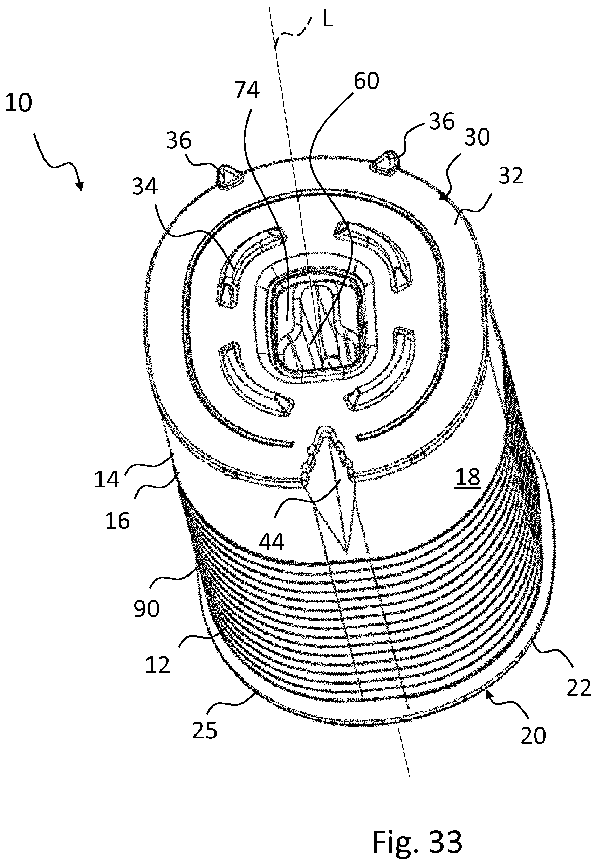

Figur 29 zeigt einen Längsschnitt durch das Filterelement 10, Figur 30 zeigt ein Detail des Filterelements 10 an der offenen Endscheibe 22. Figur 31 zeigt ein weiteres Detail des Filterelements 10 an der offenen Endscheibe 22. Figur 32 zeigt eine perspektivische Ansicht des Filterelements 10 von seiner offenen Endscheibe 22 her gesehen. Figur 33 zeigt eine isometrische Ansicht des Filterelements 10 von seiner geschlossenen Endscheibe 32 her gesehen.

Das Filterelement 10 weist einen Filterbalg 12 auf, der sich entlang einer Längsachse L erstreckt und einen Innenraum 50 umgibt. Der Filterbalg 12 ist beispielsweise aus einem gefalteten Filtermaterial gebildet, das in sich geschlossen auf einem Stützrohr 70 angeordnet ist.

Die Falten 14 des Filterbalgs 12 erstrecken sich über die gesamte Länge des Filterbalgs 12. Die Längskanten 16 der Falten 14 liegen in einer äußeren Mantelfläche 18 des Filterbalgs 12. Der Filterbalg 12 weist in diesem Beispiel einen Querschnitt mit zwei sich gegenüberliegenden kreisbogenförmigen Abschnitten auf, die durch gerade Bereiche verbunden sind.

An einem stirnseitigen ersten Ende 20 und einem entlang der Längsachse L diesem gegenüberliegenden stirnseitigen zweiten Ende 30 des Filterelements 10 sind Endscheiben 22, 32 angeordnet, welche den Filterbalg 12 an seinen Stirnkanten abdichten. Die Endscheiben 22, 32 können in üblicher Weise beispielsweise aus geschäumtem Polyurethan gebildet sein.

Am ersten Ende 20 ist eine zum Innenraum 50 geöffnete Endscheibe 22 angeordnet. Am gegenüberliegenden zweiten Ende 30 ist eine geschlossene Endscheibe 32 angeordnet. Die geschlossene Endscheibe 32 weist nach außen abstehende kreissegmentartige Abstandsnoppen 34 auf, die einen in den Innenraum 50 weisenden Dorn 60 umgeben. Die Abstandsnoppen 34 können zur Abstützung des Filterelements 10 in dem Gehäuse 102 dienen. Die Abstandsnoppen 34 sind vorzugsweise einstückig mit der Endscheibe 32 ausgebildet.

Die offene Endscheibe 22 weist einen nach außen weisenden Wulst 28 auf, der bereichsweise die Öffnung 24 in der Endscheibe 22 umgibt. Der Wulst 38 ist vorzugsweise einstückig mit der Endscheibe 22 ausgebildet. Der Wulst 28 hat eine annähernd U-förmige Form. und verläuft annähernd U-förmig um die Öffnung 24 der Endscheibe 22, so dass ein Teil der Öffnung 24 von dem Wulst 28 umgeben ist und ein Teil wulstfrei ist. Der Wulst 28 umgibt ungefähr drei Viertel des Umfangs der zentralen Öffnung 24.

Dabei weist der wulstfreie Bereich der Öffnung 24 der Endscheibe 22 vorzugsweise eine Kante 29 auf, die besonders stark verrundet ist. Durch den wulstfreien Bereich der Öffnung 24 kann Fluid in einen Reinkanal austreten.

Der Wulst 28 kann zum Abstützen des Filterelements 10 in einem Gehäuse dienen. Dies ist vorteilhaft besonders bei einem Gehäuse, in das das Filterelement 10 liegend, d.h. mit der Längsachse L schräg oder horizontal ausgerichtet, eingebaut ist.

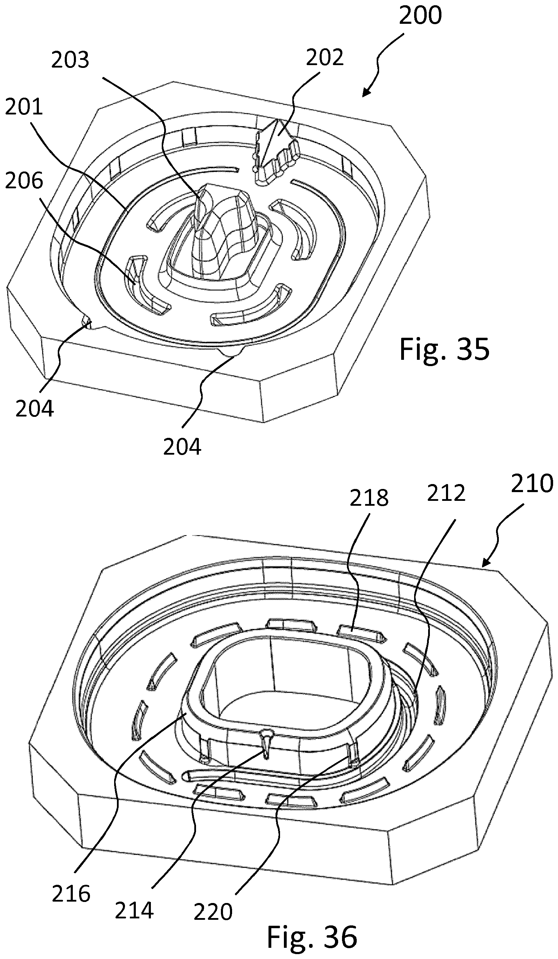

Aus fertigungstechnischen Gründen sind in der ersten Endscheibe 22 Einprägungen von Abstandshaltern 218 einer Gussform 210 (Figur 36), in der die erste Endscheibe 22 mit der Reinluft-Dichtung 25 an den Filterbalg 12 angegossen wurde, ausgebildet. Die erste Endscheibe 22 und die umfangseitige Reinluft-Dichtung 25 bestehen hier aus Polyurethan.

Die zweite Endscheibe 32 weist aus fertigungstechnischen Gründen wie die erste Endscheibe 22 eine nicht näher bezeichnete Einprägung auf, die durch einen Abstandhalter einer Gussform 200 (Figur 35) verursacht wurde. Die Einprägung der zweiten Endscheibe 32 ist weitgehend durchgängig umlaufend ausgebildet und nur im Bereich der Einkerbung 44 unterbrochen.

Die Strömungsrichtung des zu filternden Fluids ist durch den Filterbalg 12 gerichtet. Ist dessen Reinseite innen vorgesehen, strömt das Fluid von der Außenseite des Filterbalgs 12 in den Innenraum 50 und von dort durch die Öffnung 24 aus dem Filterelement 10 hinaus. Optional kann die Durchströmungsrichtung auch umgekehrt vorgesehen sein.

Der Filterbalg 12 weist an seinem zweiten Ende 30 eine Einkerbung 44 auf, deren axiale Länge 46 in Richtung der Längsachse L kürzer als die Längserstreckung des Filterbalgs 12 in Richtung der Längsachse L ist. Die Einkerbung 44 ist lokal begrenzt und erstreckt sich nicht über die gesamte Länge des Faltenbalgs 12. Vorzugsweise hat die Einkerbung 44 den größten Faltenkantenabstand an der Endscheibe 32 und verjüngt sich mit zunehmendem Abstand von der Endscheibe 32.

Die Einkerbung 44 weitet lediglich den Abstand zwischen zwei benachbarten Falten 14 auf, wobei die Falten 14 sich insgesamt über die gesamte Länge des Faltenbalgs 12 erstrecken.

Zwischen der Einkerbung 44 und der gegenüberliegenden offenen Endscheibe 22 können Fixierelemente 90 vorgesehen sein, welche gewährleisten, dass in diesem Bereich der Abstand zwischen den Falten 14 konstant gehalten ist. Es können optional übliche Fixierelemente 90 wie Fadenwickel, Leimraupen, Raupen von Schmelzklebstoff, Prägungen ("Pleatlock") quer zu den Längskanten 16 der Falten 14 und dergleichen vorgesehen sein.

Die Einkerbung 44 kann auf unterschiedliche Weise erzeugt werden. Sie kann in den Filterbalg 12 eingebracht werden, nachdem die optionalen Fixierelemente 90 bereits angebracht wurden. Die Einkerbung 44 kann beim Herstellen der Endscheibe 32 in den Filterbalg 12 eingebracht werden.

Es kann optional vorgesehen sein, dass wie in dem Ausführungsbeispiel in den Figuren 1 bis 13 jeweils eine Einkerbung 40, 44 an beiden Enden 20, 30 des Filterelements 10 vorgesehen ist.

Die offene Endscheibe 22 steht radial mit einem Überstand 23 über den Filterbalg 12 über und kann als radiale Dichtung 25 genutzt werden (Figuren 30, 31). Der Überstand 23 beträgt vorzugsweise mindestens 3 mm, bevorzugt mindestens 5 mm, besonders bevorzugt mindestens 6 mm, weiter bevorzugt mindestens 8 mm, weiter bevorzugt mindestens 10 mm, insbesondere bevorzugt mindestens 8 mm und höchstens 15 mm.

Auf der Seite der Endscheibe 22, an welcher der Wulst 28 angeordnet ist, ist der Überstand 23 der Endscheibe 22 geringer als auf der diametral gegenüberliegenden Seite. Optional kann die Endscheibe 22 jedoch auch mit umlaufend konstantem Überstand 23 ausgebildet sein.

An der geschlossenen Endscheibe 32 ragt ein hohler, etwa T-förmiger Dorn 60 in den Innenraum 50. Der Dorn 60 kann als Montagehilfe bei der Montage des Filterelements 10 in ein Gehäuse 102 genutzt werden.

An der der Einkerbung 44 gegenüberliegenden Seite der Endscheibe 32 sind zwei am Umfang beabstandete Nocken 36 angeordnet, die in radialer Richtung über die Endscheibe 32 überstehen. Diese dienen als Montagehilfe, so dass beim Einschieben des Filterelements 10 in sein Gehäuse der Filterbalg 12 und die Endscheibe 32 von der Gehäusewand beabstandet bleiben.

Das Stützrohr 70 weist entlang seiner Länge eine nach innen ragende Rippe 78 auf, die zur Positionierung des Stützrohrs 70 in einer Gießschale für die Endscheiben 22, 32 genutzt werden kann.

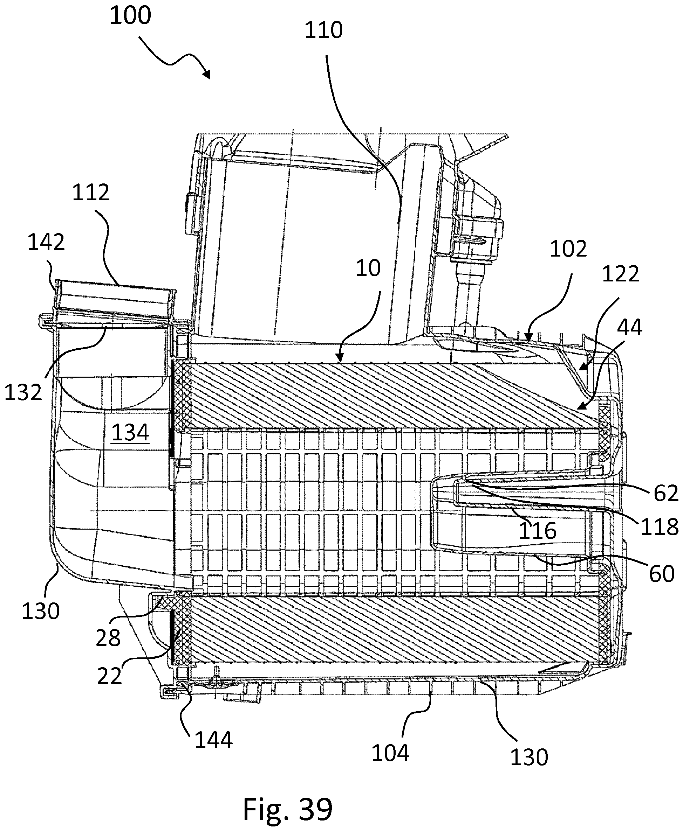

An der geschlossenen Endscheibe 32 ragt ein hohler Dorn 60 in den Innenraum 50. Der Dorn 60 kann als Montagehilfe bei der Montage des Filterelements 10 in ein Gehäuse 100 genutzt werden. Dies ist insbesondere in den Figuren 39 bis 46 zu sehen, in denen das Filtersystem 100 mit in das Gehäuse 102 eingesetztem Filterelement 10 dargestellt ist.

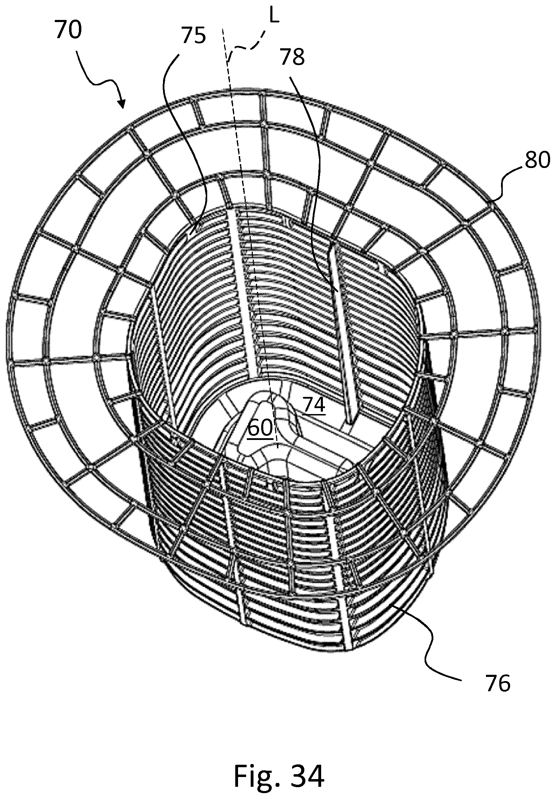

Figur 34 zeigt das Stützrohr 70 für das Filterelement 10 mit der nach innen weisenden Rippe 78, die sich axial entlang des Körpers 76 des Stützrohrs 70 erstreckt. An einem Ende, das später an der offenen Endscheibe 22 vorgesehen ist, weist das Stützrohr 70 einen umgelegten breiten Rand 80 auf. Der Rand 80 dient als Stützstruktur und ist hier im Bereich der ersten Endscheibe 22 gitterförmig mit radialen Streben und in Umfangsrichtung umlaufenden Ringen ausgebildet, zwischen denen nicht näher bezeichnete Durchbrüche vorgesehen sind. Durch die Durchbrüche kann das Material der Endscheibe 22, beispielsweise Polyurethan, durchgreifen und so den Rand 80 vollständig in der Endscheibe 22 einbetten.

An dem Ende, das später an der geschlossenen Endscheibe 32 vorgesehen ist, ist im Zentrum der Dorn 60 zu erkennen. Der Dorn 60 kann aus einem nicht-elastormeren Material wie das Stützrohr 70 gebildet sein. Das Stützrohr 70 ist an diesem Ende mit einer Scheibe 74 geschlossen, von welcher der Dorn 60 axial in den Innenraum ragt.

Die Figur 35 zeigt eine Gießschale 200 zum Schäumen einer geschlossenen Endscheibe 32 für das Filterelement 10 nach Figur 29, und Figur 36 zeigt eine Gießschale zum Schäumen einer offenen Endscheibe 22 für das Filterelement nach Figur 29. Am Übergang des Randes 80 zum Körper 76 des Stützrohrs 70 sind Aussparungen 75 vorgesehen, in welche das Material der Endscheibe 22 eingreifen kann.

In der Gießschale 200 für die geschlossene Endscheibe 32 ist im Zentrum eine Dornkontur 203 zu erkennen, die komplementär zum Dorn 60 im Stützrohr 70 ist und auf die das Stützrohr 70 aufgesteckt werden kann. Eine Einkerbstruktur 202 ist dazu vorgesehen, zwischen zwei Falten 14 des auf dem Stützrohr 70 angeordneten Filterbalgs 12 einzugreifen und diese aufzuspreizen.

Zwei Nockenkonturen 204 sind zur Erzeugung der Nocken 36 vorgesehen. Vertiefungen 206 sind als Noppenkontur für die Noppen 34 vorgesehen. Die Noppenkonturen 34 sind von einer umlaufenden Nut 201 umgeben, die an der Einkerbstruktur unterbrochen ist.

Die Gießschale 210 für die offene Endscheibe 22 umfasst eine Wulstkontur 212, in welcher der Wulst 28 der Endscheibe 22 gebildet wird, sowie einen Stutzen 216, welcher die Öffnung 24 der Endscheibe 24 definiert. An der Außenseite des Stutzens 216 ist eine Aufnahme 214 ausgebildet, welche die nach innen ragende Rippe 78 des Stützrohrs 70 aufnimmt. Ferner sind Erhebungen 218 vorgesehen, welche den Stutzen 216 in konstantem Abstand umgeben. Die Elemente 218 greifen in den nach außen umgelegten Rand 80 des Stützrohrs 70. Ferner sind am Stutzen 216 kleine Vorsprünge 220 verteilt, die in die Aussparungen 75 des Stützrohrs 70 zur Verankerung eingreifen.

Über das Stützrohr 70 können beide Gießschalen 200, 210 zueinander definiert ausgerichtet werden, indem das Stützrohr 70 mit dem Dorn 60 auf die Dornkontur 203 der Gießschale 200 der geschlossenen Endscheibe 22 gesetzt wird und die

innenliegenden Rippe 78 in die Aufnahme 214 der Gießschale 210 für die offene Endscheibe 22 gesteckt wird.

Figur 39 zeigt ein Flussdiagramm eines Ablaufs bei der Herstellung eines Filterelements 10 mittels der Gießschalen 200, 210.

In Schritt S100 wird ein Stützrohr 70 bereitgestellt, auf dem ein Filterbalg 12 mit oder ohne Einkerbung 40, 44 angeordnet ist und das eine nach innen weisende axiale Rippe 78 aufweist. Das Stützrohr 70 weist ein offenes Ende auf und ein axial gegenüberliegendes geschlossenes Ende, in dem ein Dorns 60 in den Innenraum des Stützrohrs 70 ragt. Das Ende des Stützrohrs 70 ist mit einer Scheibe 74 geschlossen.

In Schritt S102 werden Gießschalen 200, 210 für eine offene Endscheibe 22 und eine geschlossene Endscheibe 32 bereitgestellt.

In Schritt S104 wird das Ausgangsmaterial der Endscheibe 22, insbesondere flüssiges Polyurethan, in die Gießschale 210 gegossen.

Das Stützrohr 70 wird in Schritt S106 mit seinem umgelegten Rand 80 in die Gießschale 210 in das noch flüssige Ausgangsmaterial für die offene Endscheibe 22 gesetzt, wobei die nach innen weisende Rippe 78 in die Aussparung 214 des Stutzens 216 gesteckt wird. Die Erhebungen 218 greifen in Durchbrüche am Rand 80 des Stützrohrs 70 ein. Das flüssige Ausgangsmaterial umschäumt und umschließt den Rand 80 des Stützrohrs 70 und den Ansatz des Filterbalgs 12. Nach Abschluss der Reaktion des Materials wird das Stützrohr 70 mit Filterbalg 12 und offener Endscheibe 22 aus der Gießschale 210 entnommen.

In Schritt S108 wird das Ausgangsmaterial der Endscheibe 32, insbesondere flüssiges Polyurethan, in die Gießschale 200 gegossen,

In Schritt S110 wird das Stützrohr 70 mit dem Filterbalg 12 in die Gießschale 200 in das noch flüssige Ausgangsmaterial für die geschlossene Endscheibe 32 gesetzt und über den T-förmigen Dorn 60 auf der Dornkontur 203 lagerichtig positioniert. Dabei greift die Einkerbstruktur 202 der Gießschale 200 zwischen zwei Falten des Filterbalgs 12 ein und spreizt diese auf.

Das flüssige Ausgangsmaterial umschäumt und bedeckt die geschlossene Seite des Stützrohrs 70 und umschließt den Ansatz des Filterbalgs 12. Dabei werden die Abstandsnoppen 34 auf der geschlossenen Endscheibe 32 in den Vertiefungen 206 ausgebildet. Ebenso wird die Einkerbung 40 im Filterbalg 12 fixiert. Nach Abschluss der Reaktion des Materials wird das Stützrohr 70 mit Filterbalg 12 und geschlossener Endscheibe 32 aus der Gießschale 210 entnommen.

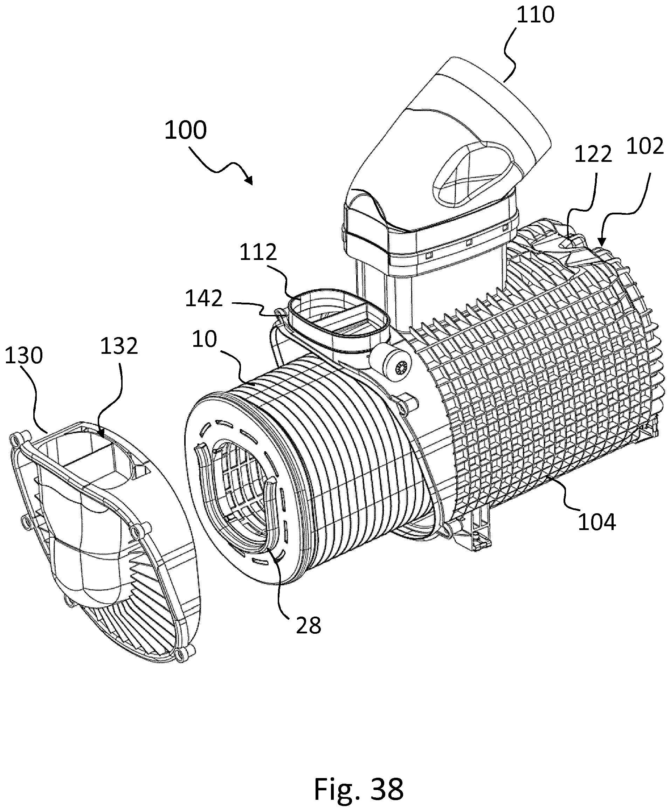

Die Figuren 38 bis 50 zeigen ein Ausführungsbeispiel eines Filtersystems 100 nach einem Ausführungsbeispiel der Erfindung mit einem Filterelements 10, wie es voranstehend in den Figuren 29 bis 33 beschrieben wurde.

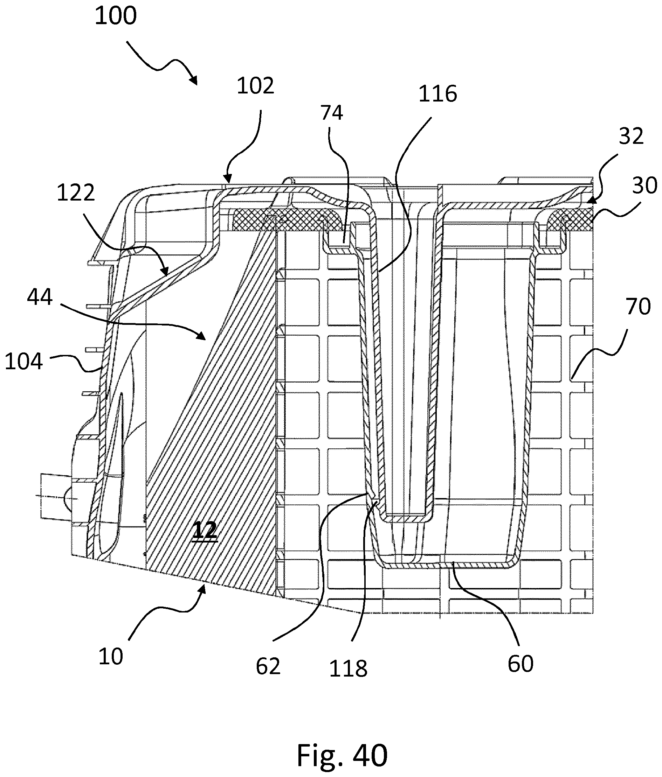

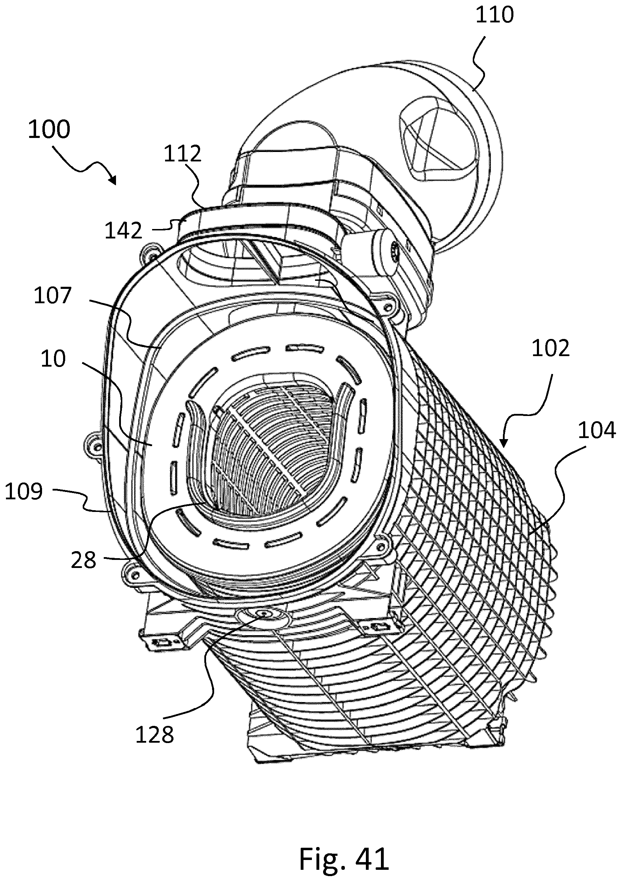

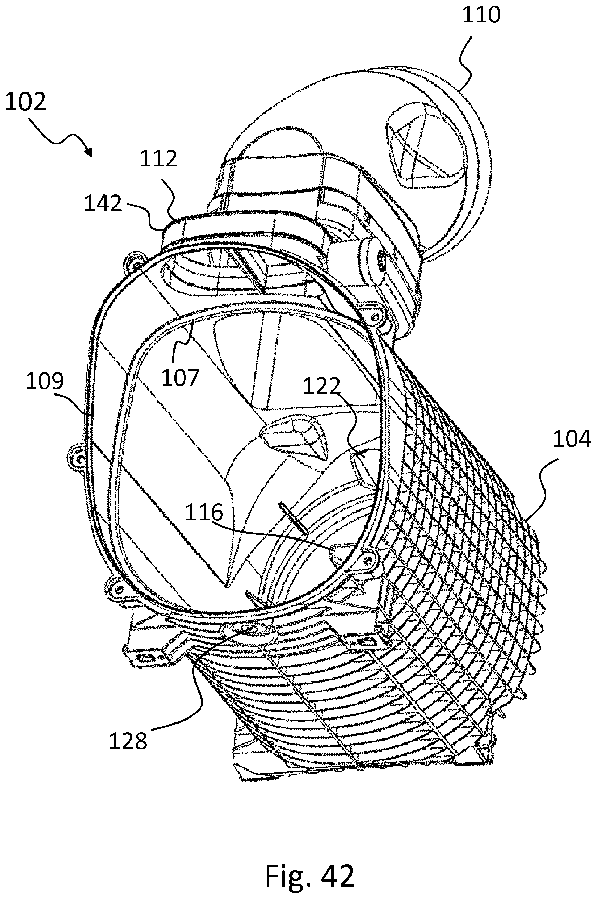

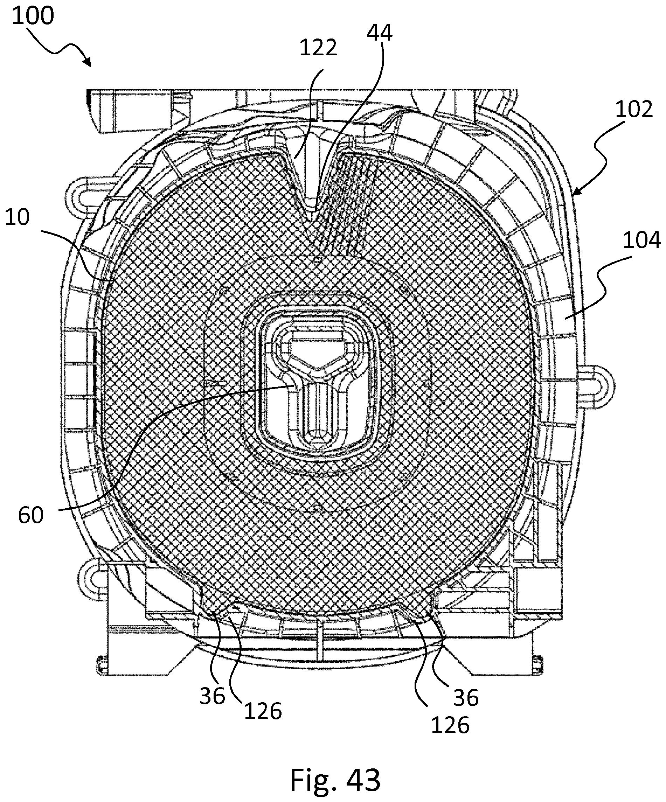

Figur 38 zeigt eine Explosionsdarstellung eines Filtersystems 100 nach einem Ausführungsbeispiel der Erfindung mit dem Filterelement 10 nach Figur 29 eingesetzt in ein Gehäuse 102 mit einem Gehäuseteil 104 das mit einem Deckel 130 verschlossen ist. Figur 39 zeigt einen Längsschnitt durch das Filtersystem 100 und Figur 40 einen Längsschnitt durch ein Detail des Filtersystems 100 mit Montagehilfen im Bereich der geschlossenen Endscheibe 32 des Filterelements 10. Figur 41 zeigt eine perspektivische Ansicht des Filtersystems 100 mit geöffnetem Gehäuse 102 und eingesetztem Filterelement 10, während Figur 42 dieselbe Ansicht des Gehäuses ohne Filterelement 10 zeigt. Figur 43 zeigt einen Querschnitt durch das Filtersystem 100 mit eingesetztem Filterelement 100 und erkennbaren Montagehilfen in Draufsicht.

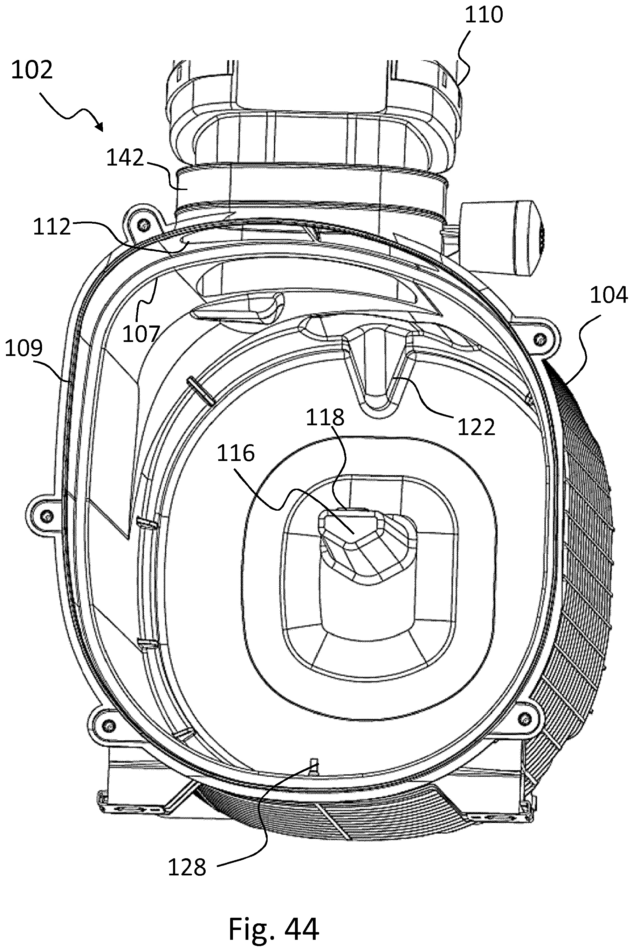

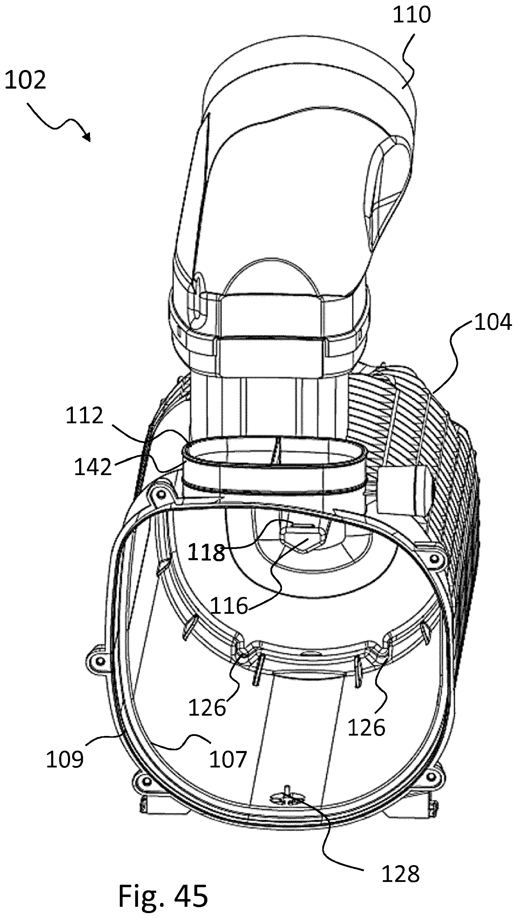

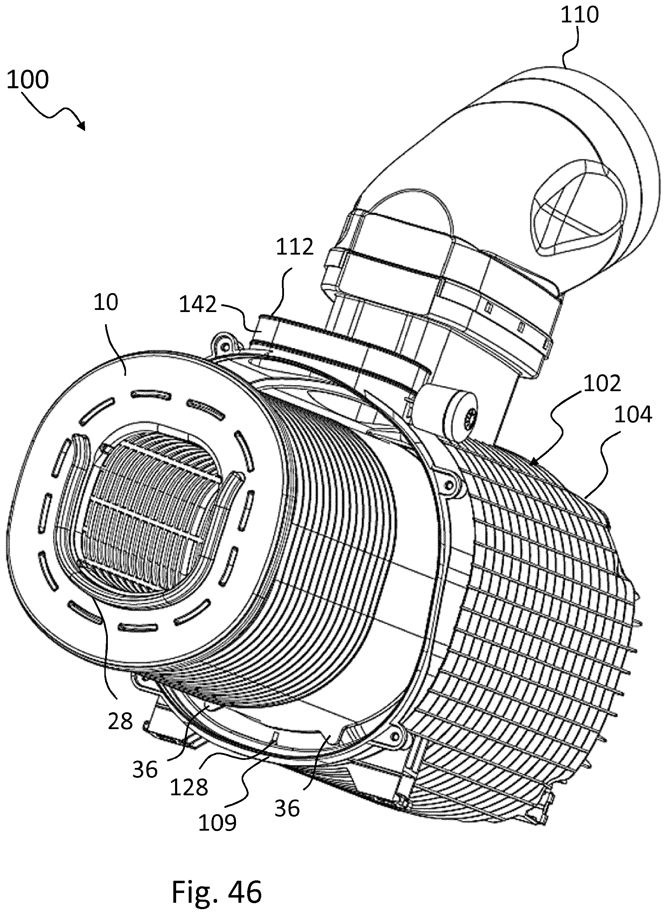

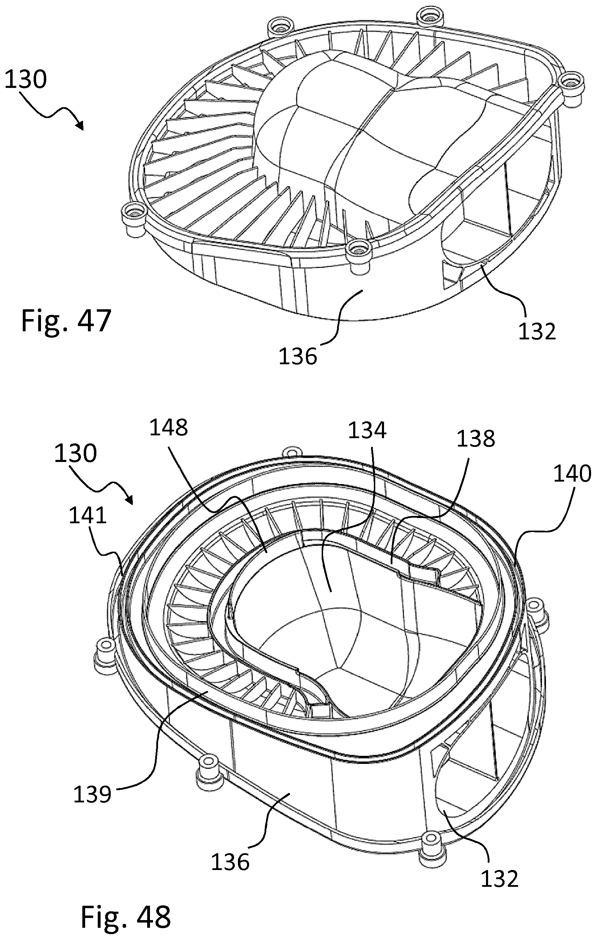

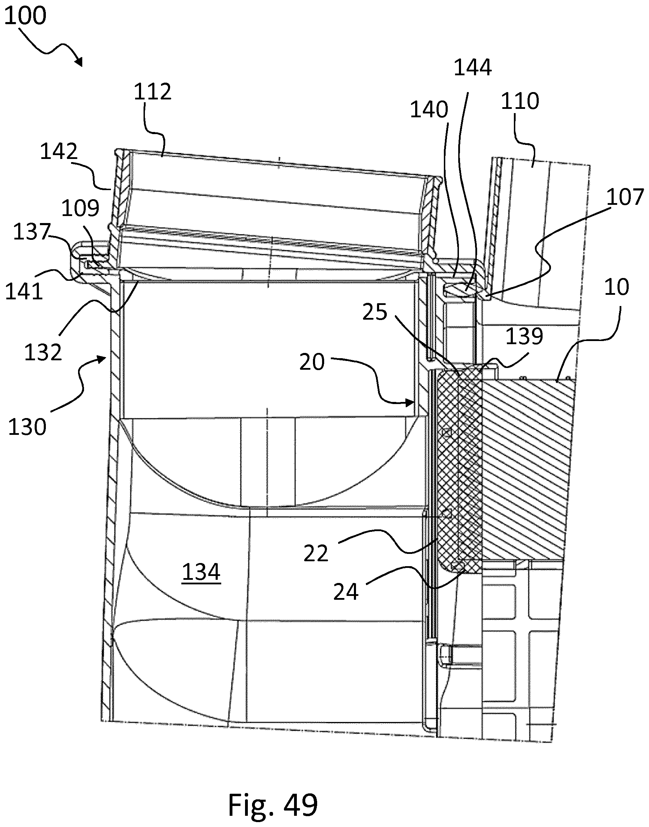

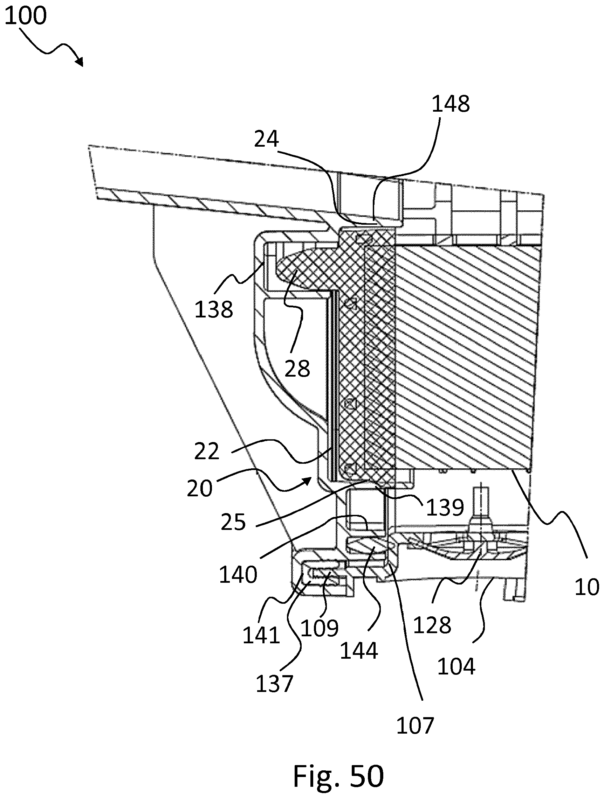

Die Figuren 44 und 45 zeigen perspektivische Ansichten des geöffneten Gehäuses 102 des Filtersystems 100. Figur 46 zeigt das Filterelement 10 nach Figur 29 beim Einführen in das Gehäuse 102 des Filtersystems 100. Die Figuren 47 und 48 zeigen den Deckel 130 im Detail. Die Figuren 49 und 50 zeigen im Längsschnitt Details im Bereich des Deckels 130 am Gehäuseteil 104.

Das Gehäuse 102 weist das erste Gehäuseteil 104, beispielsweise einen Gehäusetopf, und ein zweites Gehäuseteil in Form eines Deckels 130 auf. Am offenen Ende des Gehäuseteils 104 isst ein umlaufender Kragen 109 ausgebildet, welcher mit einem Dichtelement 137 (Figuren 49, 50) zusammenwirkt.

Das Gehäuse 102 weist einen Einlass 110 und einen Auslass 112 auf. Der Einlass 110 ist direkt benachbart zum Auslass 112 am ersten Gehäuseteil 104 vorgesehen, beispielsweise tangential daran angeordnet.

Einlass 110 und Auslass 112 des Gehäuses 102 sind eng benachbart und im gleichen Gehäuseteil 104 angeordnet. Das zu filternde Fluid erfährt zwischen Einlass 110 und Auslass 112 eine Richtungsumlenkung, insbesondere eine Umlenkung um 180°.

Wie in den Figuren 41 und 42 zu erkennen ist, weist das zweite Gehäuseteil 104 des Gehäuses 102 im eingebauten Zustand des Filterelements 10 unterhalb des Filterelements 10 ein Ventil 128 auf, das zum Ablassen von Wasser aus dem Gehäuse 102 dient. Das Ventil 128 ragt in den Innenraum des Gehäuses 102. Ebenso ist zu erkennen, dass Einlass 110 und Auslass 112 direkt benachbart am gleichen Gehäuseteil 104 angeordnet sind.

Benachbart zum Kragen 109 ist an innenseitig im Gehäuseteil 104 eine Schulter 107 vorgesehen, die zwischen den gehäuseseitigen Öffnungen für Einlass 110 und Auslass 112 verläuft. Die Schulter 107 bildet eine Dichtfläche für eine Dichtung 144 zwischen Deckel und Gehäuseteil 104 (Figuren 49, 50).

Das erste Gehäuseteil 104 weist in seinem Bodenteil einen zum Dorn 60 korrespondierenden Dorn 116 auf. Der korrespondierende Dorn 116 weist an der Kontaktfläche zum Dorn 60 des Filterelements 10 ein Rastelement 118 auf, das mit einem Rastelement 62 auf der Innenseite des hohlen Dorns 60 zusammenwirkt. Beim Einführen des Filterelements 10 in das Gehäuseteil 104 wird das Filterelement 10 hierdurch vor einem Verkippen geschützt. Wird der Deckel 130 mit dem Gehäuseteil 104 verbunden, ist der Dorn 60 von dem korrespondierenden Dorn 116 getrennt.

Wird das Filterelement 10 in das erste Gehäuseteil 104 eingeschoben, fängt der korrespondierende Dorn 116 den Dorn 60 des Filterelements 10, so dass das Filterelement 10 lagerichtig auf seine Endposition geschoben werden kann.

Anschließend wird der Deckel 130 am ersten Gehäuseteil 104 befestigt. Im montierten Zustand des Filterelements 10 fällt eine zentrale Längsachse L des Filterelements 10 mit einer zentralen Längsachse des zweiten Gehäuseteils 104 zusammen.

Ist der Innenraum 50 des Filterelements 10 die Reinseite des Filterelements 10, ist der Deckel 130 an der Reinseite des Gehäuses 102 angeordnet. Der Deckel 130 weist im Innenbereich einen Reinfluidkanal 134 auf, der das gefilterte Fluid, beispielsweise Reinluft, an den Auslass 122 leitet. Hierzu ist am ersten Gehäuseteil 104 ein Stutzen 142 angeordnet, der den Auslass 112 bereitstellt. Der Stutzen 142 ragt in axialer Richtung über die Endscheibe 22 des eingebauten Filterelements 10 hinaus.

Der Deckel 130 weist eine Öffnung 132 auf, welche bei geschlossenem Deckel 130 unter dem Stutzen 142 des ersten Gehäuseteils 104 positioniert ist.

Der Wulst 28 des Filterelements 10 an der offenen Endscheibe 22 liegt an einer entsprechenden Aufnahme des Deckels 130 an und dichtet mit der Dichtung 25 des Überstands 23 radial gegen die Rohseite des Filterelements 10 ab. Der Wulst 28 dient zum Abstützen des Filterelements 10.

Dadurch, dass nur ein Teil der offenen Endscheibe 22 den Wulst 28 aufweist, ist der wulstfreie Bereich um die Öffnung 24 zum Auslass 112 offen, das gefilterte Fluid kann durch den Deckel 130 zum Auslass 112 strömen.

Das erste Gehäuseteil 104 weist ferner einen zum Dorn 60 korrespondierenden Dorn 116 auf, wie in den Figuren 44 und 45 zu erkennen ist. Der korrespondierende Dorn 116 weist an der Kontaktfläche zum Dorn 60 des Filterelements 10 ein Rastelement 118 auf, das mit einem Rastelement 62 auf der Innenseite des hohlen Dorns 60 zusammenwirkt. Der Dorn 60 gibt den Lagewinkel des Filterelements 10 vor und verhindert ein Abkippen des Filterelements 10 beim Einführen des Filterelements 10 in das Gehäuseteil 104..

Wird das Filterelement 10 in das erste Gehäuseteil 104 eingeschoben, wie in Figur 46 angedeutet ist, fängt der korrespondierende Dorn 116 den Dorn 60 des Filterelements 10, so dass das Filterelement 10 auf seine Endposition geschoben werden kann. Gleichzeitig sorgen die Nocken 36 an der geschlossenen Endscheibe 32 dafür, dass der Filterbalg 12 in sicherem Abstand über das Ventil 128 gleiten kann.

Figur 47 zeigt eine isometrische Ansicht einer Außenseite des Deckels 130, und Figur 48 zeigt eine Innenansicht des Deckels 130. Der Deckel 130 ist von der Seite gesehen keilförmig ausgebildet, so dass dessen Rand 136 von einem Bereich mit geringer Höhe zu einem gegenüberliegenden Bereich mit großer Höhe ansteigt. Im Bereich mit großer Höhe ist die Öffnung 132 angeordnet, welche den Reinfluidkanal 134 im Innenbereich des Deckels 130 freigibt.

Die Öffnung 132 ist bei geschlossenem Deckel 130 unter dem Stutzen 142 positioniert. In dem Deckel 130 ist eine Luftführung 134 ausgebildet. Der Reinfluidkanal 134 dient zum Leiten der gefilterten Luft aus dem Innenraum 50 des Filterelements 10 zu dem Auslass 112 des Gehäuses 102. Der Reinfluidkanal 134 weist hier zwei Bereiche in der Öffnung 132 auf, die im montierten Zustand mit dem Auslass 112 in der Seitenwand des Gehäuseteils 104 kommunizieren.

Der Deckel 130 weist eine umlaufende Dichtungsnut 141 auf, die eine erste Dichtebene aufspannt. Radial innerhalb dieser Dichtungsnut 141 ist eine weitere umlaufende Dichtungsnut 140 angeordnet, die eine zweite Dichtebene aufspannt. Die Öffnung 132 des Deckels 130 liegt zwischen den beiden Dichtebenen. Eine separate Abdichtung der Öffnung 132 kann daher entfallen

Wie in den Ansichten der Figuren 49 und 50 im Detail zu erkennen ist, ist in der Dichtungsnut 140 die umlaufende Dichtung 144 aufgenommen, welche zwischen Deckel 130 und Gehäuseteil 104 angeordnet ist und zur Abdichtung zwischen Rohseite und Reinseite dient. In der Dichtungsnut 141 ist eine umlaufende Dichtung 137 zum Dichten der Reinseite gegen den Außenbereich des Filtersystems 100 aufgenommen.

Die offene Endscheibe 22 weist einen radialen Überstand 23 auf (Figuren 30, 31)), der als radiale Dichtung 25 gegen einen Dichtbereich des Deckels 130 abdichtet.

Die Dichtungsnuten 140, 141 umgeben einen umlaufenden Kragen 139, dessen Innenfläche als Dichtfläche für die radiale Dichtung 25 der offenen Endscheibe 22 bildet.

Bei geschlossenem Deckel 130 greift der Wulst 28 in eine Aufnahme 138 des Deckels 130 ein, die innerhalb des Kragens 139 verläuft. Dies ist in den Detailansichten der Figuren 49 und 50 zu erkennen, bei denen der Deckel 130 mit dem Gehäuseteil 104 verbunden ist. Die Aufnahme 138 kann eine axiale Verspannung des Filterelements 10 im Gehäuse 102 bewirken.

Der Deckel 130 ragt im Bereich des Gehäuses 102 nahe des Ventils 128 mit einer Rippe 148 in die Öffnung 24 der Endscheibe 22. Das Ventil 128 ist unterhalb des Filterelements 10 angeordnet. Die Rippe 148 verhindert, dass sich Wasser im Reinbereich sammelt und leitet das Wasser in das Filterelement 10 zurück, wo es durch das Ventil 128 abfließen kann.

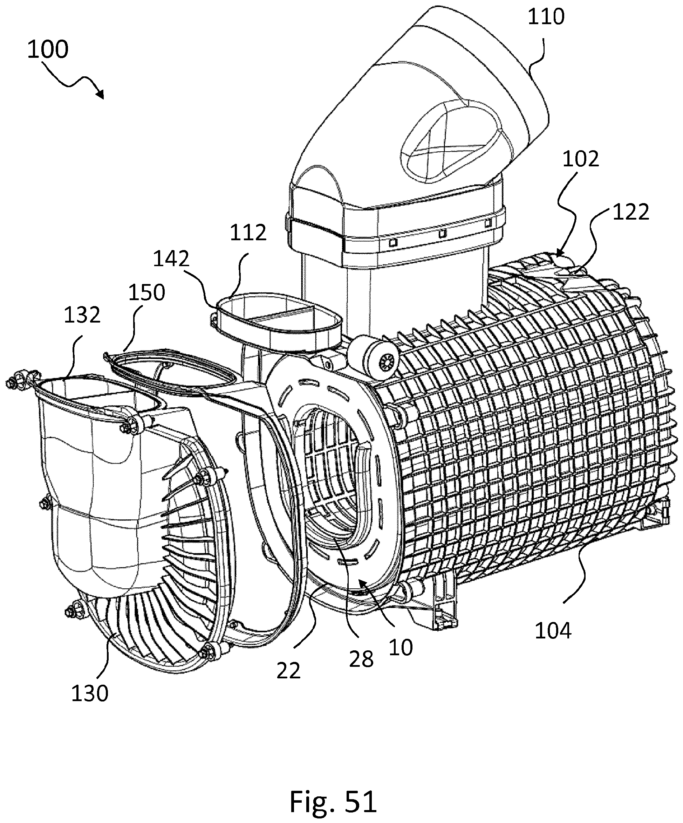

Die Figuren 51 bis 57 zeigen ein weiteres Ausführungsbeispiel eines Filtersystems 100 nach einem weiteren Ausführungsbeispiel der Erfindung.

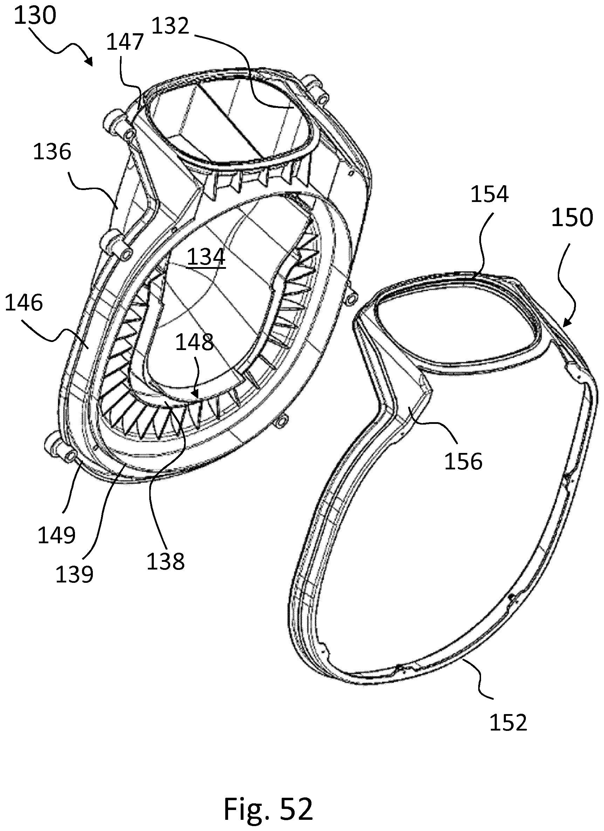

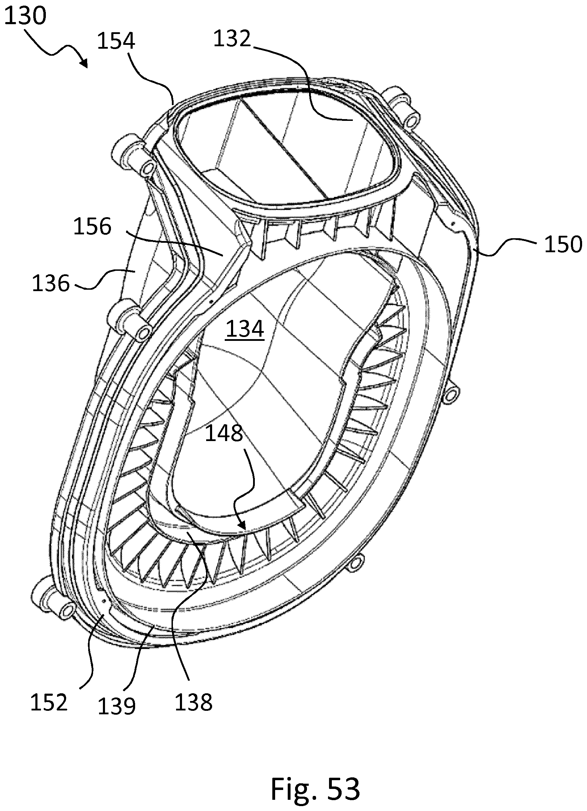

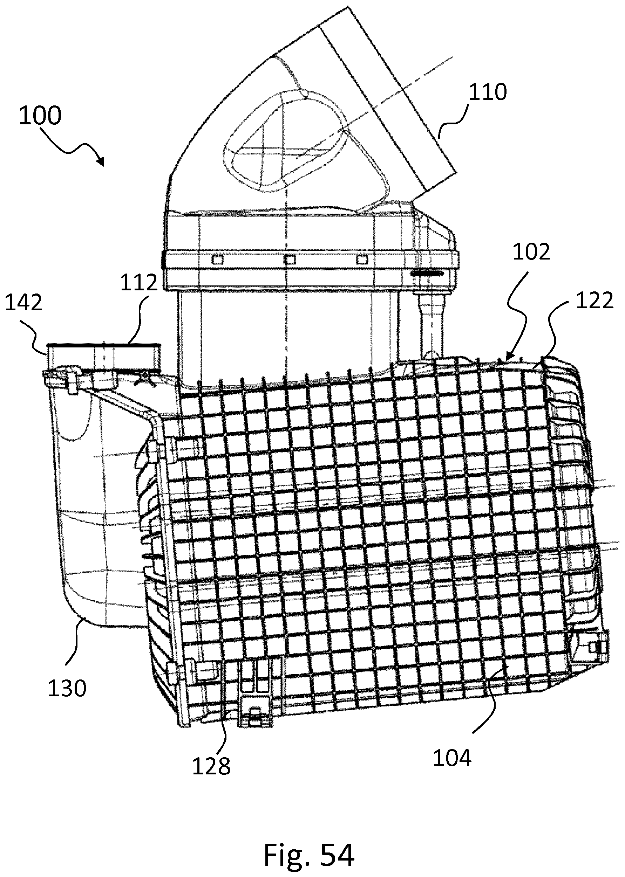

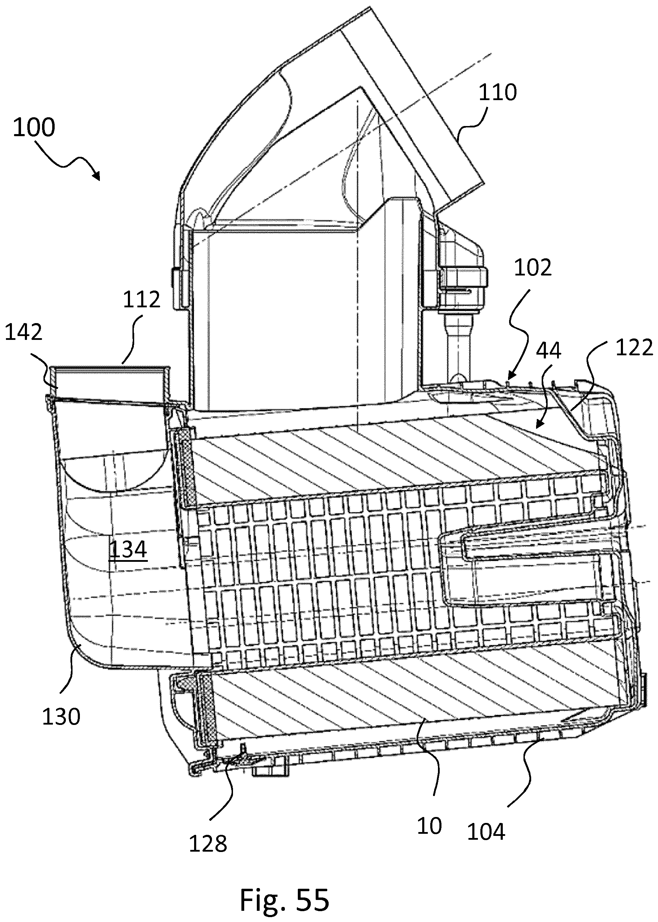

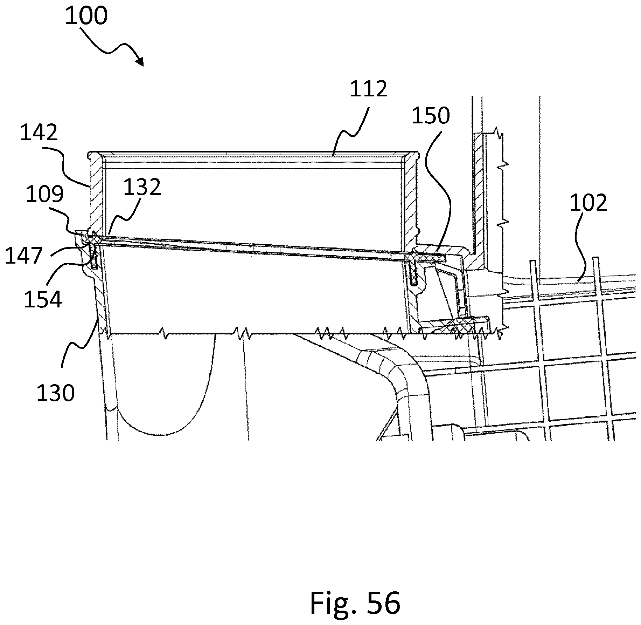

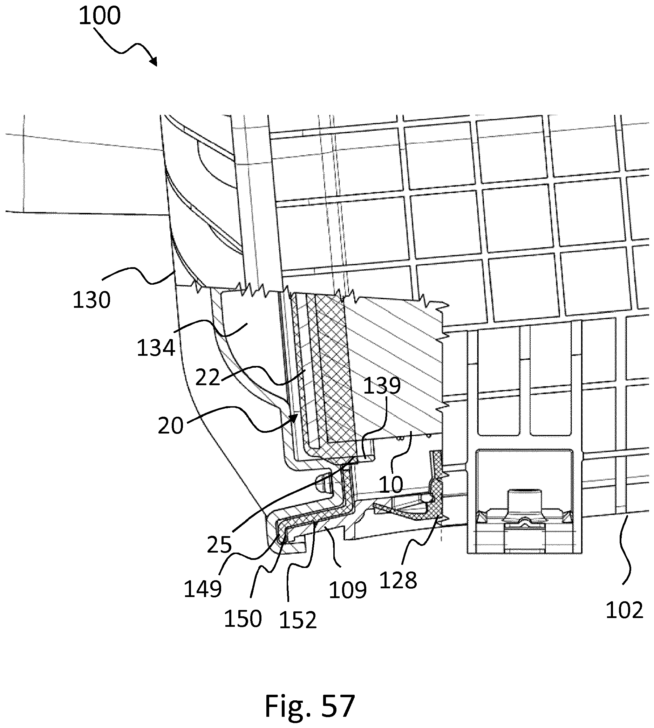

Dabei zeigt Figur 51 zeigt in Explosionsdarstellung ein Filtersystem 100 mit einem Gehäuse 102, das ein erstes Gehäuseteil 104, beispielsweise einen Gehäusetopf, und ein zweites Gehäuseteil in Form eines Deckels 130 und einer einstückigen Dichtung 150 zur Abdichtung von Reinseite zu Rohseite und gegen den Außenbereich des Filtersystems 100 aufweist. Figur 52 zeigt eine Explosionsdarstellung von einstückiger Dichtung 150 und Deckel 130 des Filtersystems 100 nach Figur 51, während Figur 53 eine perspektivische Ansicht des Zusammenbaus von Deckel 130 und Dichtung 150 zeigt. Figur 54 zeigt eine Seitenansicht des Filtersystems 100 und Figur 55 einen Längsschnitt durch das Filtersystem 100. Figur 56 zeigt einen Schnitt durch ein Detail einer Reinfluidanschlusses des Deckels 130 des Filtersystems 100 und Figur 57 einen Schnitt durch ein Detail einer Rohfluidseite des Deckels 130 des Filtersystems 100.

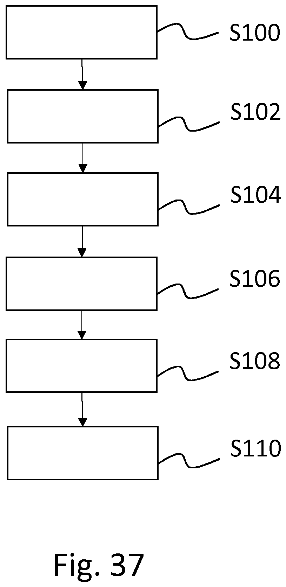

Die weiteren Komponenten und Details von Filtersystem 100 und Filterelement 10 sind in den vorherigen Ausführungsbeispielen, insbesondere in den Figuren 29 bis 46, beschrieben, auf die zur Vermeidung unnötiger Wiederholungen verwiesen wird.

Das Filterelement 10 weist wenigstens eine axial begrenzte Einkerbung 44 in seinem Filterbalg 12, vorzugsweise an der Seite seiner geschlossenen Endscheibe 32, auf. Mit der geschlossenen Endscheibe 32 voran wird das Filterelement 10 in das erste Gehäuseteil 104 eingeführt, wobei es auf Nocken 36 über ein Ventil 128 im ersten Gehäuseteil 104 unterhalb des Filterelements 10 geschoben werden kann. Die geschlossene Endscheibe 32 weist einen zentralen, nach innen weisenden Dorn 60 auf, der auf einen Dorn 116 im ersten Gehäuseteil 104 aufgeschoben wird.

Die offene Endscheibe 22 des Filterelements 10 weist einen Wulst 28 auf, der die Öffnung 24 der Endscheibe 22 teilweise umschließt. Im wulstfreien Bereich der Öffnung 24 kann Fluid aus dem Innenraum 50 des Filterelements 10 über einen Reinfluidkanal 134 des Deckels 130 zum Auslass 112 strömen. Einlass 110 und Auslass 112 sind direkt benachbart im gleichen Gehäuseteil 104 angeordnet.

Der Deckel 130 weist einen keilförmigen Rand 136 auf, in dessen Bereich mit der größten Höhe eine Öffnung 132 angeordnet ist. Diese ist bei geschlossenem Deckel 130 unter dem Stutzen 142 des ersten Gehäuseteils 104 positioniert. Der Stutzen 142 ragt in axialer Richtung über die Endscheibe 22 des eingebauten Filterelements 10 hinaus.

Der Deckel 130 weist eine Aufnahme 138 für den Wulst 28 auf. Einkerbung 44, Dorn 60 und Wulst 28 sichern das Filterelement 10 gegen Verkippen im Gehäuse 102, was bei einem liegend eingebauten Filterelement 10 vorteilhaft ist.

Die einstückige Dichtung 150 weist einen ersten Dichtring 152 und einen damit auf beiden Seiten über Flanken 156 verbundenen, dagegen abgewinkelten Dichtring 154 auf. Der erste Dichtring 152 liegt an eine Dichtfläche 146 am Außenrand der Innenseite des Deckels 130 an, wobei die Dichtfläche 146 weitgehend einen Kragen 139 umgibt, dessen Innenseite als Dichtfläche für die radiale Dichtung 25 der Endscheibe 22 dient. An die Dichtfläche 146 ist eine äußere Nut 149 angeschlossen, welche einen Rand des Dichtrings 152 aufnimmt.

Der zweite Dichtring 154 liegt an einer Dichtfläche 147 an, welche die Öffnung 132 im Rand 136 des Deckels 130 umschließt. An den beiden Übergängen zwischen den beiden Dichtflächen 146, 147 liegt die Dichtung 150 mit den Flanken 156 an.

Vorteilhaft ist in der einstückigen Dichtung 150 sowohl die Abdichtung zwischen Rohund Reinseite um den Stutzen 142 des Auslasses 112 als auch zur Umgebung umlaufend um den Deckel 130 integriert.

Ferner weist der Deckel 130 oberhalb der Aufnahme 138 für den Wulst 28 eine in das Gehäuse 102 und die Öffnung 24 der offenen Endscheibe 22 hineinragende Rippe 148 auf, welche dazu dient, Wasser aus dem Reinkanal 134 des Deckels 130 abzuhalten und durch das Filterelement 10 zum Ventil 128 zu leiten.

Wie in der Schnittdarstellung der Figur 55, welche das Gehäuse in Figur 54 zeigt, und den Detaildarstellungen in Figur 56 an der Reinfluidseite des Filtersystems 100 und in Figur 57 an der Rohfluidseite des Filtersystems 100 zu sehen ist, stellt die Dichtung 150 sowohl die Abdichtung des Deckels 130 gegen den Außenbereich des Deckels 130 als auch gegen die Rohfluidseite bereit. Die Abdichtung Reinfluidseite gegen Rohfluidseite wird durch den ersten Dichtring 152 bewirkt. Die Abdichtung gegen den Außenbereich erfolgt mittels des zweiten Dichtrings 154.

Der erste Dichtring 152 weist dazu ein annähernd Z-förmiges Profil auf, bei dem von einem mittleren Schenkel an jedem seiner Enden jeweils ein Schenkel in entgegengesetzte Richtungen absteht. Der zweite Dichtring 154 weist ein etwa T-förmiges Profil auf.

Der erste Dichtring 152 liegt mit einem abstehenden Schenkel in der Nut 149, mit dem mittleren Schenkel an der Innenseite des umlaufenden Kragens 109 des Gehäuseteils 104 und mit dem weiteren abstehenden Schenkel stirnseitig an der Außenseite des Kragens 139 an.

Mit dem erfindungsgemäßen Filterelement 10 und Filtersystem 100 kann ein insbesondere liegend eingebautes Filterelement 10 sicher montiert und demontiert werden. Durch Elemente eine oder mehrere Einkerbungen 40, 44 am Filterbalg 12 und Dorn 60 und gegebenenfalls eines Wulsts 28, kann eine lagerichtige Positionierung erreicht und das Filterelement 10 bei liegendem Einbau vor Verkippen geschützt werden.

Es versteht sich, dass die bisher beschriebenen Ausgestaltungen in den Figuren nicht auf einen runden Querschnitt des Filterelements 10 beschränkt sind. Vielmehr kann der Querschnitt des Filterelements 10 nach Bedarf gewählt werden, beispielsweise rund, oval, viereckig und dergleichen.

## Patentansprüche

1. Filterelement (10) zum Filtern eines, insbesondere gasförmigen, Fluids, mit einer Längsachse (L), umfassend einen um die Längsachse (L) angeordneten Filterbalg (12), der einen Innenraum (50) umschließt, mit einem stirnseitigen ersten Ende (20) und einem diesem gegenüberliegenden stirnseitigen zweiten Ende (30), mit einer zum Innenraum (50) geöffneten Endscheibe (22) am ersten Ende (20) und einer geschlossenen Endscheibe (32) am gegenüberliegenden zweiten Ende (30), wobei der Filterbalg (12) Falten (14) aufweist, deren radial äußeren Faltenkanten (16) in seiner äußeren Mantelfläche (18) liegen,
wobei der Filterbalg (12) zumindest an einem seiner stirnseitigen Enden (20, 30) eine Einkerbung (40, 44) aufweist, deren axiale Länge (42, 46) in Richtung der Längsachse (L) kürzer als eine Längserstreckung des Filterbalgs (12) in Richtung der Längsachse (L) ist, wobei die zumindest eine Einkerbung (40, 44) an der Endscheibe (22, 32) beginnt und sich in Längsrichtung (L) von der Endscheibe (22, 32) weg erstreckt, wobei die Einkerbung (40, 44) den größten Faltenkantenabstand an der Endscheibe (22, 32) hat und sich mit zunehmendem Abstand von der Endscheibe verjüngt.

2. Filterelement nach Anspruch 1, wobei der Filterbalg (12) wenigstens zwei Einkerbungen (40, 44) aufweist.

3. Filterelement nach Anspruch 2, wobei die beiden Einkerbungen (40, 44) an unterschiedlichen Enden (20, 30) des Filterbalgs (12) angeordnet sind.

4. Filterelement nach Anspruch 2 oder 3, wobei die beiden Einkerbungen (40, 44) auf der Mantelfläche (18) des Filterbalgs (12) zueinander versetzt angeordnet sind.

5. Filterelement nach einem der vorhergehenden Ansprüche, wobei die Falten (14) im Bereich um die Einkerbung (40, 44) und/oder in der Einkerbung (40, 44) unterbrechungsfrei ausgeführt sind.

6. Filterelement nach einem der vorhergehenden Ansprüche, wobei die wenigstens eine Einkerbung (40, 44) als Aufweitung zwischen zwei Falten (14) in radialer und/oder axialer Richtung ausgebildet ist.

7. Filterelement nach einem der vorhergehenden Ansprüche, wobei die wenigstens eine Einkerbung (40, 44) durch eine Einkerbstruktur (202) in einem Werkzeug (200) beim Herstellen der Endscheibe (22, 32) gebildet ist.

8. Filterelement nach einem der vorhergehenden Ansprüche, wobei die wenigstens eine Einkerbung (40, 44) durch eine Einkerbstruktur (72) an einem Stützrohr (70) des Filterbalgs (12) gebildet ist.

9. Filterelement nach einem der vorhergehenden Ansprüche, wobei die wenigstens eine Einkerbung (40, 44) durch eine Einkerbstruktur (212) eines Einlegeteils (210) in der Endscheibe (22, 32) des Filterbalgs (12) gebildet ist.

10. Filterelement nach einem der vorhergehenden Ansprüche, wobei die Falten (14) wenigstens bereichsweise durch Fixierelemente (90) mit einem konstanten, insbesondere äquidistanten, Abstand zueinander gehalten sind.

11. Filtersystem (100) mit einem Gehäuse (102) mit einem Fluideinlass (110) und einem Fluidauslass (112) und einem im Gehäuse (102) angeordneten, wechselbaren Filterelement (10) nach einem der vorhergehenden Ansprüche, wobei die Einkerbung (40, 44) mit einem Gegenelement (120, 122) des Gehäuses (102) zusammenwirkt, insbesondere mit einer korrespondierenden Einkerbung,.

12. Filtersystem nach Anspruch 11, wobei Einlass (110) und Auslass (112) am gleichen Gehäuseteil (104) angeordnet sind.

13. Filtersystem nach Anspruch 11 oder 12, wobei ein Reinfluidkanal (134) in einem Deckel (130) des Gehäuses (102) angeordnet ist.

14. Filtersystem nach einem der Ansprüche 11 bis 13, wobei das Gehäuses (102) einen Dorn (116) aufweist, der mit einem korrespondierenden Dorn (60) im Filterelement (10) in Richtung der Längsachse (L) zusammenwirkt oder wobei das Gehäuses (102) einen Dorn (116) aufweist, der mit einem korrespondierenden Dorn (60) im Filterelement (10) in Richtung der Längsachse (L) zusammenwirkt, und wobei der Dorn (116) ein Rastelement (118) aufweist, insbesondere in Form einer Rastnase und/oder eines Hinterschnitts, das mit einem korrespondierenden Rastelement (62) am Dorn (60) des Filterelements (10) zusammenwirkt.

## Claims

1. Filter element (10) for filtering a fluid, in particular a gaseous fluid, having a longitudinal axis (L), comprising a filter bellows (12) disposed around the longitudinal axis (L) and which encloses an interior space (50), having a first frontal end (20) and a second frontal end (30) opposite said first end (20), having an end disc (22) open towards the interior space (50) at the first end (20) and a closed end disc (32) at the opposite second end (30), wherein the filter bellows (12) features folds (14), the radially outer fold edges (16) of which lie in its outer circumferential surface (18),
wherein the filter bellows (12) features, at least at one of its frontal end faces (20, 30), a notch (40, 44) whose axial length (42, 46) in the direction of the longitudinal axis (L) is shorter than a longitudinal extension of the filter bellows (12) in the direction of the longitudinal axis (L), wherein the at least one notch (40, 44) begins at the end disc (22, 32) and extends in the longitudinal direction (L) away from the end disc (22, 32), wherein the notch (40, 44) has the greatest fold edge distance at the end disc (22, 32) and tapers with increasing distance from the end disc.

2. Filter element according to claim 1, wherein the filter bellows (12) comprises at least two notches (40, 44).

3. Filter element according to claim 2, wherein the two notches (40, 44) are disposed at different ends (20, 30) of the filter bellows (12).

4. Filter element according to claim 2 or 3, wherein the two notches (40, 44) on the lateral surface (18) of the filter bellows (12) are offset in relation to each other.

5. Filter element according to one of the preceding claims, wherein the folds (14) in the area around the notch (40, 44) and/or in the notch (40, 44) are designed without interruption.

6. Filter element according to one of the preceding claims, wherein the at least one notch (40, 44) is formed as a widening between two folds (14) in radial and/or axial direction.

7. Filter element according to one of the preceding claims, wherein the at least one notch (40, 44) is formed by a notch structure (202) in a tool (200) when manufacturing the end disc (22, 32).

8. Filter element according to one of the preceding claims, wherein the at least one notch (40, 44) is formed by a notch structure (72) on a support tube (70) of the filter bellows (12).

9. Filter element according to one of the preceding claims, wherein the at least one notch (40, 44) is formed by a notch structure (212) of an insert (210) in the end disc (22, 32) of the filter bellows (12).

10. Filter element according to one of the preceding claims, wherein the folds (14) are held at least in some areas at a constant, in particular equidistant, distance from one another by fixing elements (90).

11. Filter system (100) having a housing (102) with a fluid inlet (110) and a fluid outlet (112) and an exchangeable filter element (10) disposed in the housing (102) according to one of the preceding claims,
wherein the notch (40, 44) cooperates with a counterpart (120, 122) of the housing (102), in particular with a corresponding notch.

12. Filter system according to claim 11, wherein the inlet (110) and outlet (112) are located on the same housing component (104).

13. Filter system according to claim 11 or 12, wherein a clean fluid channel (134) is disposed in a cover (130) of the housing (102).

14. Filter system according to one of the claims 11 to 13, wherein the housing (102) features a mandrel (116) which cooperates with a corresponding mandrel (60) in the filter element (10) in the direction of the longitudinal axis (L), or wherein the housing (102) features a mandrel (116) which cooperates with a corresponding mandrel (60) in the filter element (10) in the direction of the longitudinal axis (L), and wherein the mandrel (116) features a latching element (118), in particular in the form of a latching lug and/or an undercut, which cooperates with a corresponding latching element (62) on the mandrel (60) of the filter element (10).

## Revendications

1. Élément filtrant (10) destiné à filtrer un fluide, notamment gazeux, ayant un axe longitudinal (L), comprenant un soufflet de filtre (12) disposé autour de l'axe longitudinal (L) et entourant un espace intérieur (50), ayant une première extrémité frontale (20) et une seconde extrémité frontale (30) opposée à celle-ci, ayant un disque d'extrémité (22) ouvert vers l'espace intérieur (50) à la première extrémité (20) et un disque d'extrémité fermé (32) à la seconde extrémité opposée (30), le soufflet de filtre (12) présentant des plis (14) dont les arêtes de pliage (16) radialement extérieures sont situées dans sa surface circonférentielle extérieure (18),
le soufflet de filtre (12) présentant au moins à l'une de ses extrémités frontales (20, 30) une encoche (40, 44) dont la longueur axiale (42, 46) dans la direction de l'axe longitudinal (L) est plus courte qu'une extension longitudinale du soufflet de filtre (12) dans la direction de l'axe longitudinal (L), l'encoche (40, 44), au moins au nombre d'une, commence au niveau du disque d'extrémité (22, 32) et s'étend dans la direction longitudinale (L) en s'éloignant du disque d'extrémité (22, 32), l'encoche (40, 44) ayant la plus grande distance de l'arête de pliage au niveau du disque d'extrémité (22, 32) et se rétrécissant au fur et à mesure que la distance augmente par rapport au disque d'extrémité.

2. Élément filtrant selon la revendication 1, le soufflet de filtre (12) présentant au moins deux encoches (40, 44).

3. Élément filtrant selon la revendication 2, les deux encoches (40, 44) étant disposées sur des extrémités (20, 30) différentes du soufflet de filtre (12).

4. Élément filtrant selon la revendication 2 ou 3, les deux encoches (40, 44) disposées sur la surface circonférentielle (18) du soufflet de filtre (12) étant décalées les unes par rapport aux autres.

5. Élément filtrant selon l'une quelconque des revendications précédentes, les plis (14) étant réalisés sans interruption dans la zone autour de l'encoche (40, 44) et/ou dans l'encoche (40, 44).

6. Élément filtrant selon l'une quelconque des revendications précédentes, l'encoche (40, 44), au moins au nombre d'une, étant conçue en tant qu'élargissement entre deux plis (14) en sens radial et/ou axial.

7. Élément filtrant selon l'une quelconque des revendications précédentes, l'encoche (40, 44), au moins au nombre d'une, étant formée par une structure d'encoche (202) dans un outil (200) lors de la fabrication du disque d'extrémité (22, 32).

8. Élément filtrant selon l'une quelconque des revendications précédentes, l'encoche (40, 44), au moins au nombre d'une, étant formée par une structure d'encoche (72) sur un tube de support (70) du soufflet de filtre (12).

9. Élément filtrant selon l'une quelconque des revendications précédentes, l'encoche (40, 44), au moins au nombre d'une, étant formée par une structure d'encoche (212) d'une pièce d'insertion (210) dans le disque d'extrémité (22, 32) du soufflet de filtre (12).

10. Élément filtrant selon l'une quelconque des revendications précédentes, les plis (14) étant maintenus au moins dans certaines sections par des éléments de fixation (90) à une distance constante, notamment équidistante, les uns des autres.

11. Système de filtre (100) ayant un boîtier (102) avec une entrée de fluide (110) et une sortie de fluide (112) et un élément filtrant (10) échangeable, disposé dans le boîtier (102) selon l'une quelconque des revendications précédentes, l'encoche (40, 44) coopérant avec un contre-élément (120, 122) du boîtier (102), notamment avec une encoche correspondante.

12. Système de filtre selon la revendication 11, l'entrée (110) et la sortie (112) étant disposées sur le même composant de boîtier (104).

13. Système de filtre selon la revendication 11 ou 12, un canal de fluide pur (134) étant disposé dans un couvercle (130) du boîtier (102).

14. Système de filtre selon l'une quelconque des revendications 11 à 13, le boîtier (102) présentant une broche (116) qui coopère avec une broche (60) correspondante dans l'élément filtrant (10) dans la direction de l'axe longitudinal (L) ou le boîtier (102) présentant une broche (116) qui coopère avec une broche (60) correspondante dans l'élément filtrant (10) dans la direction de l'axe longitudinal (L), et la broche (116) présentant un élément d'encliquetage (118), notamment sous forme d'un ergot d'encliquetage et/ou d'une contre-dépouille, et qui coopère avec un élément d'encliquetage (62) correspondant au niveau de la broche (60) de l'élément filtrant (10).
